(19) **Europäisches Patentamt / European Patent Office / Office européen des brevets**

(11) **EP 4 697 800 A1**

(12) **EUROPEAN PATENT APPLICATION**
published in accordance with Art. 153(4) EPC

(43) Date of publication:
**18.02.2026 Bulletin 2026/08**

(21) Application number: **24830200.2**

(22) Date of filing: **13.05.2024**

(51) International Patent Classification (IPC):
**H04W 28/24** $^{(2009.01)}$

(52) Cooperative Patent Classification (CPC):
**H04W 28/06; H04W 28/24**

(86) International application number:
**PCT/CN2024/092937**

(87) International publication number:
**WO 2025/001552 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.06.2023 CN 202310791347**

(71) Applicant: **Huawei Technologies Co., Ltd.
Shenzhen, Guangdong 518129 (CN)**

(72) Inventor: **SUN, Haiyang
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **QOS PARAMETER CONFIGURATION METHOD AND COMMUNICATION APPARATUS**

(57)    Embodiments of this application relate to the field of communication technologies, and provide a QoS parameter configuration method and a communication apparatus, to resolve a problem of an air interface resource waste during service transmission. The method includes: receiving a first QoS parameter; and sending a second QoS parameter, where the second QoS parameter is determined based on the first QoS parameter and compressed-data information, and the compressed-data information indicates a proportion of compressed data or a proportion of non-compressed data in a transmitted unit data amount. Embodiments of this application are applied to a QoS parameter configuration process in a scenario in which a 5G system is combined with a TSN/TSC architecture.

A network device receives a first QoS parameter — 901

The network device sends a second QoS parameter, where the second QoS parameter is determined based on the first QoS parameter and compressed-data information, and the compressed-data information indicates a proportion of compressed data or a proportion of non-compressed data in a transmitted unit data amount — 902

FIG. 9

**Description**

This application claims priority to Chinese Patent Application No. 202310791347.1, filed with the China National Intellectual Property Administration on June 29, 2023 and entitled "QOS PARAMETER CONFIGURATION METHOD AND COMMUNICATION APPARATUS", which is incorporated herein by reference in its entirety.

**TECHNICAL FIELD**

This application relates to the field of communication technologies, and in particular, to a quality of service (quality of service, QoS) parameter configuration method and a communication apparatus.

**BACKGROUND**

In a 5th generation mobile communication technology (5th generation mobile communication technology, 5G) system, to ensure end-to-end quality of service of a service, a QoS flow (flow)-based 5G QoS framework is proposed. In the framework, same transmission processing (such as scheduling and an admission threshold) may be performed on data packets controlled by using a same QoS flow. A transmission procedure of the QoS flow may include: When a terminal device, an access network device, and a user plane function (user plane function, UPF) establish the QoS flow, the access network device may allocate an air interface resource for data transmission based on a QoS parameter.

In an industrial control scenario, for service transmission in the 5G QoS framework in combination with a time sensitive network (time sensitive network, TSN)/time sensitive communication (time sensitive communication, TSC) system, it is proposed that the TSN/TSC system may perform user plane data compression based on a service feature. For example, a duplicate data packet and a padding amount part in a service data packet may be compressed based on packet detection and then transmitted. For example, when receiving an uplink data packet of the TSN/TSC system, the terminal device compresses a part of fields in the received uplink data packet, and then sends the uplink data packet to the access network device. When receiving the uplink data packet sent by the terminal device, the access network device performs a decompression operation on the compressed field in the uplink data packet. However, if the TSN/TSC system still provides QoS guarantee based on an existing resource application, regardless of whether data compression needs to be performed, the access network device needs to reserve an air interface resource based on the QoS parameter. Consequently, a resource waste of the air interface resource may occur.

**SUMMARY**

Embodiments of this application provide a QoS parameter configuration method and a communication apparatus, to resolve a problem of an air interface resource waste during service transmission.

To achieve the foregoing objective, the following technical solutions are used in embodiments of this application.

According to a first aspect, a quality of service QoS parameter configuration method is provided. The method includes: receiving a first QoS parameter; and sending a second QoS parameter, where the second QoS parameter is determined based on the first QoS parameter and compressed-data information, and the compressed-data information indicates a proportion of compressed data or a proportion of non-compressed data in a transmitted unit data amount.

Herein, a process of receiving the first QoS parameter and sending the second QoS parameter may be, for example, performed by a policy control network element (policy control function, PCF) network element or performed by a time sensitive communication time synchronization function (time sensitive communication time synchronization function, TSCTSF) network element. This is not limited in this application. The second QoS parameter may be used by a RAN network element to reserve an air interface resource, for example, used to reserve a GBR air interface resource.

In this way, if the second QoS parameter is determined based on the compressed-data information, when a network device sends the second QoS parameter, it is equivalent to that the second QoS parameter is determined based on a current data compression status. If the second QoS parameter is delivered to a radio access network side, for example, the radio access network (radio access network, RAN) network element, the RAN network element may reserve an air interface resource based on the second QoS parameter. In comparison with a conventional technology in which a resource waste of an air interface resource may occur because the RAN network element cannot learn of a data size of a to-be-transmitted QoS flow in advance and reserves an air interface resource merely based on a preconfigured air interface resource size, in this application, during QoS parameter configuration on the RAN network element, QoS guarantee is provided after QoS parameter adjustment is performed based on current compressed-data information. For example, the RAN network element needs to reserve the guaranteed bit rate (guaranteed bit rate, GBR) air interface resource. If the second QoS parameter received by the RAN network element is adjusted based on the compressed-data information, a proportion of compressed data in a currently transmitted QoS flow has been considered when the second QoS parameter is delivered to the RAN network element. A size of a GBR air interface resource reserved when the delivered second QoS parameter is used by the RAN network element to reserve the air interface resource is less than a size of a GBR air interface resource reserved when the first QoS parameter is directly used by the RAN network element to reserve the air interface resource. In this way, the GBR air interface resource reserved by the RAN network element based on the second QoS parameter is only used to ensure a resource needed by a compressed data amount, so that the GBR air interface resource reserved by the RAN network element can provide the QoS guarantee, and the GBR air interface resource can also be saved.

In a possible design, a size of an air interface resource reserved by a network side device based on the second QoS parameter is less than a size of an air interface resource reserved by the network side device based on the first QoS parameter. In this way, because data compression exists during data transmission, the compressed data amount needs to occupy a small air interface resource. If the current data compression status is considered when a QoS parameter is delivered to the RAN network element, it is equivalent to that the second QoS parameter is set based on the current data compression status. When reserving the air interface resource based on the second QoS parameter, the RAN network element may reserve only an air interface resource needed by the compressed data amount, so that a problem of a resource waste caused by a preset size of a reserved air interface resource can be avoided.

In a possible design, receiving the first QoS parameter includes: receiving a request sent by an application function (application function, AF) network element, where the request includes the first QoS parameter. For example, the PCF network element may receive the first QoS parameter requested by the AF network element. When the AF network element has a service control requirement, before service data transmission starts, or in a service transmission process, the AF network element may request the PCF network element to perform proper QoS parameter authorization based on the compressed-data information and the first QoS parameter. When obtaining the proper second QoS parameter, the PCF network element may send the proper second QoS parameter to the RAN network element, so that the RAN network element reserves an air interface resource that matches a current service requirement, to reducing the resource waste.

In a possible design, the request further includes the compressed-data information. For example, when the process is performed by the TSCTSF network element, the TSCTSF network element may receive the compressed-data information and the first QoS parameter that are sent by the AF network element, and the TSCTSF network element obtains the second QoS parameter through calculation based on the compressed-data information and the first QoS parameter, and sends the second QoS parameter to the PCF network element, to request the PCF network element to authorize the second QoS parameter. Alternatively, when the process is performed by the PCF network element, the PCF network element receives the first QoS parameter and the compressed-data information from the AF network element, and the PCF network element determines the second QoS parameter based on the first QoS parameter and the compressed-data information, and sends the second QoS parameter to the RAN network element during authorization. In this way, the RAN network element may reserve the air interface resource that matches the current service requirement, to reduce the resource waste.

In a possible design, sending the second QoS parameter includes: sending the second QoS parameter to the policy control function PCF network element. When the TSCTSF network element receives the first QoS parameter and sends the second QoS parameter, when obtaining the second QoS parameter, the TSCTSF network element may send the second QoS parameter to the PCF network element to request authorization.

In a possible design, the method further includes: receiving a third QoS parameter that is recommended by the PCF and sent by the PCF network element; and sending a fourth QoS parameter to the AF network element, where the fourth QoS parameter is determined based on the compressed-data information and the third QoS parameter. In this case, when the TSCTSF network element receives the first QoS parameter and sends the second QoS parameter, if the PCF network element determines, based on a current network status, that the second QoS parameter cannot be authorized, the TSCTSF network element may receive the recommended third QoS parameter sent by the PCF network element. Then, the TSCTSF network element may determine the fourth QoS parameter based on the recommended third QoS parameter and the compressed-data information, and then send the fourth QoS parameter to the AF network element, so that the AF network element may send the fourth QoS parameter to the RAN network element for resource reservation.

In a possible design, before receiving the first QoS parameter, the method further includes: receiving the compressed-data information sent by a session management function (session management function, SMF) network element or a user plane function (user plane function, UPF) network element. In this design, receiving the first QoS parameter and sending the second QoS parameter may be performed by the PCF network element. In other words, the compressed-data information used when the PCF network element calculates the second QoS parameter may be notified by the SMF network element or notified by the UPF network element. For example, when determining that the proportion of the compressed data reaches a threshold, the UPF network element may consider that there is a large amount of data that can be compressed in this case, and may send the proportion of the compressed data to the SMF network element, so that the SMF sends the proportion of the compressed data to the PCF network element, and the PCF network element can obtain, through calculation, the second QoS parameter that meets the service requirement.

In a possible design, before receiving the compressed-data information, the method further includes: sending a trigger indication to the SMF network element, where the trigger indication indicates the SMF network element to perform notification when the compressed-data information changes. In this design, it is equivalent to that the PCF network element sends a compressed-data information change trigger to the SMF network element, so that the SMF network element can execute a new N4 rule, to subscribe to the compressed-data information from the UPF network element.

In a possible design, before receiving the compressed-data information sent by the UPF network element, the method further includes: sending a subscription indication to the UPF network element, where the subscription indication indicates the UPF network element to perform reporting when the compressed-data information meets a condition. In this design, after the UPF network element is servitized, the PCF network element may directly subscribe to the compressed-data information from the UPF network element without using the SMF network element, so that a procedure of subscribing to the compressed-data information is simple, and resource occupation for signaling transmission is reduced.

In a possible design, sending the second QoS parameter includes: sending the second QoS parameter to the session management function SMF network element. In this design, when the PCF network element obtains the second QoS parameter and performs authorization, the PCF network element may send the second QoS parameter to the SMF network element, so that the SMF network element may send the second QoS parameter to the RAN network element, and the RAN network element reserves the air interface resource that meets the current service requirement, to avoid the resource waste.

In a possible design, the method further includes: receiving a fifth QoS parameter sent by the SMF network element, where the fifth QoS parameter includes a QoS parameter obtained by the SMF network element by adjusting the second QoS parameter; and sending a sixth QoS parameter to the AF network element, where the sixth QoS parameter is determined based on the fifth QoS parameter and the compressed-data information.

In this design, if the SMF network element sends the second QoS parameter to the RAN network element, but the RAN network element detects that a QoS flow resource corresponding to the second QoS parameter cannot be met, the RAN network element may notify the SMF network element that the SMF network element needs to perform a QoS flow modification procedure. Therefore, when the SMF network element needs to perform the QoS flow modification procedure, the SMF network element may adjust the received second QoS parameter based on resource occupation on a RAN network element side, to obtain the fifth QoS parameter, and then send the fifth QoS parameter to the PCF network element. The PCF network element may further re-determine a QoS parameter based on the fifth QoS parameter and the compressed-data information, to obtain the sixth QoS parameter, and send the sixth QoS parameter to the AF network element. The AF network element may send the sixth QoS parameter to the RAN network element, so that the RAN network element performs resource reservation based on the sixth QoS parameter, to avoid the resource waste.

In a possible design, the second QoS parameter is a QoS parameter recommended when a seventh QoS parameter cannot be authorized after the seventh QoS parameter is determined based on the first QoS parameter and the compressed-data information. In this design, if the PCF network element may obtain a new QoS parameter through calculation based on the first QoS parameter and the compressed-data information when obtaining the first QoS parameter and the compressed-data information, and if the new QoS parameter cannot be authorized, the PCF network element may send the recommended second QoS parameter based on the new QoS parameter obtained through calculation and the current network status. In this way, on a basis of saving a resource, the second QoS parameter also matches the current network status.

In a possible design, the proportion of the compressed data is a proportion of a quantity of compressed bits in a single data packet to a quantity of bits in the single data packet; the proportion of the compressed data is a proportion of a quantity of compressed bits in one data burst volume to a quantity of bits in the one data burst volume; or the proportion of the compressed data is a proportion of a quantity of data packets that are repeatedly transmitted in a preset time window to a total quantity of data packets.

For example, when the proportion of the quantity of compressed bits in the single data packet to the quantity of bits in the single data packet is large, the proportion of the quantity of compressed bits in one data burst volume to the quantity of bits in the one data burst volume is large, or the proportion of the quantity of data packets that are repeatedly transmitted in the preset time window to the total quantity of data packets is large, it indicates that a quantity of bits that can be compressed is large, and a small quantity of resources may be reserved when the air interface resource is reserved, to save the air interface resource.

In a possible design, the proportion of the non-compressed data is a proportion of a quantity of uncompressed bits in a single data packet to a quantity of bits in the single data packet; the proportion of the non-compressed data is a proportion of a quantity of uncompressed bits in one data burst volume to a quantity of bits in the one data burst volume; or the proportion of the non-compressed data is a proportion of a quantity of data packets that are not repeatedly transmitted in a preset time window to a total quantity of data packets.

The proportion of the non-compressed data=1-the proportion of the compressed data, and an effect of saving the resource can also be achieved.

According to a second aspect, a communication apparatus is provided, including: a receiving unit, configured to receive a first QoS parameter; and a sending unit, configured to send a second QoS parameter, where the second QoS parameter is determined based on the first QoS parameter and compressed-data information, and the compressed-data information indicates a proportion of compressed data or a proportion of non-compressed data in a transmitted unit data amount.

For beneficial benefits of the second aspect, refer to the descriptions in the first aspect.

In a possible design, a size of an air interface resource reserved by a network side device based on the second QoS parameter is less than a size of an air interface resource reserved by the network side device based on the first QoS parameter.

In a possible design, the receiving unit is configured to receive a request sent by an application function AF network element, where the request includes the first QoS parameter.

In a possible design, the request further includes the compressed-data information.

In a possible design, the sending unit is configured to send the second QoS parameter to a policy control function PCF network element.

In a possible design, the receiving unit is further configured to receive a third QoS parameter that is recommended by the PCF and sent by the PCF network element; and the sending unit is further configured to send a fourth QoS parameter to the AF network element, where the fourth QoS parameter is determined based on the compressed-data information and the third QoS parameter.

In a possible design, the receiving unit is further configured to receive the compressed-data information sent by an SMF network element or a user plane function UPF network element.

In a possible design, the sending unit is further configured to send a trigger indication to the SMF network element, where the trigger indication indicates the SMF network element to perform notification when the compressed-data information changes.

In a possible design, the sending unit is further configured to send a subscription indication to the UPF network element, where the subscription indication indicates the UPF network element to perform reporting when the compressed-data information meets a condition.

In a possible design, the sending unit is further configured to send the second QoS parameter to the session management function SMF network element.

In a possible design, the receiving unit is further configured to receive a fifth QoS parameter sent by the SMF network element, where the fifth QoS parameter includes a QoS parameter obtained by the SMF network element by adjusting the second QoS parameter; and the sending unit is further configured to send a sixth QoS parameter to the AF network element, where the sixth QoS parameter is determined based on the fifth QoS parameter and the compressed-data information.

In a possible design, the second QoS parameter is a QoS parameter recommended when a seventh QoS parameter cannot be authorized after the seventh QoS parameter is determined based on the first QoS parameter and the compressed-data information.

In a possible design, the proportion of the compressed data is a proportion of a quantity of compressed bits in a single data packet to a quantity of bits in the single data packet; the proportion of the compressed data is a proportion of a quantity of compressed bits in one data burst volume to a quantity of bits in the one data burst volume; or the proportion of the compressed data is a proportion of a quantity of data packets that are repeatedly transmitted in a preset time window to a total quantity of data packets.

In a possible design, the proportion of the non-compressed data is a proportion of a quantity of uncompressed bits in a single data packet to a quantity of bits in the single data packet; the proportion of the non-compressed data is a proportion of a quantity of uncompressed bits in one data burst volume to a quantity of bits in the one data burst volume; or the proportion of the non-compressed data is a proportion of a quantity of data packets that are not repeatedly transmitted in a preset time window to a total quantity of data packets.

According to a third aspect, a QoS parameter configuration method is provided. The method includes: sending a first QoS parameter and compressed-data information; and receiving, by a network device, a second QoS parameter, where the second QoS parameter is determined based on the first QoS parameter and the compressed-data information, and the compressed-data information indicates a proportion of compressed data or a proportion of non-compressed data in a transmitted unit data amount.

The network device may be an AF network element/a NEF network element/a TSCTSF network element or the like. The AF network element is used as an example. To be specific, the AF network element may provide the compressed-data information when sending the requested first QoS parameter. When receiving the first QoS parameter and the compressed-data information that are sent by the AF network element, the TSCTSF network element/a PCF network element may perform calculation to obtain the second QoS parameter. When the second QoS parameter is authorized and the second QoS parameter is delivered to a RAN network element, a technical effect similar to that in the first aspect can be achieved. In addition, for the AF network element, the authorized second QoS parameter may enable the AF network element to sense a QoS parameter in actual use, so as to adjust a service requirement based on the second QoS parameter in actual use.

In a possible design, sending the first QoS parameter includes: sending a request to the TSCTSF network element, where the request includes the first QoS parameter and the compressed-data information. The TSCTSF network element may obtain the second QoS parameter based on the first QoS parameter and the compressed-data information, and request the PCF network element to authorize the second QoS parameter. If the PCF network element authorizes the second QoS parameter, the PCF network element may deliver the second QoS parameter to the RAN network element via an SMF network element or the like, so that the RAN network element reserves an air interface resource based on the second QoS parameter.

In some embodiments, if the PCF cannot authorize a QoS parameter obtained based on the first QoS parameter and the compressed-data information, the PCF network element may send, to the TSCTSF network element, a third QoS parameter recommended by the PCF network element. The TSCTSF network element may obtain the second QoS parameter through calculation based on the third QoS parameter and the compressed-data information, and send the second QoS parameter to the AF network element. Therefore, receiving the second QoS parameter may include: receiving (by the AF network element) the second QoS parameter sent by the TSCTSF network element. In this way, if the second QoS parameter is sent to the AF network element when being delivered to the RAN network element, the AF network element may sense the QoS parameter in actual use, to adjust the service requirement based on the second QoS parameter in actual use.

In some embodiments, sending the first QoS parameter includes: sending (by the AF network element) the request to the PCF network element, where the request includes the first QoS parameter and the compressed-data information. The PCF obtains the second QoS parameter based on the first QoS parameter and the compressed-data information, and determines whether to authorize the second QoS parameter. If the second QoS parameter can be authorized and is sent to the AF network element, the AF network element may sense the QoS parameter in actual use, to adjust the service requirement based on the second QoS parameter in actual use.

In some embodiments, receiving the second QoS parameter includes: The AF network element receives the second QoS parameter sent by the PCF network element. In this case, the second QoS parameter may be a QoS parameter that is directly obtained by the PCF network element based on the first QoS parameter and the compressed-data information and that can be authorized, or may be a QoS parameter that is recommended by the PCF network element and that is obtained by the PCF network element based on the first QoS parameter and the compressed-data information. If the PCF network element sends the recommended QoS parameter, it may be understood that the QoS parameter directly obtained by the PCF network element based on the first QoS parameter and the compressed-data information cannot be authorized. For example, a RAN side cannot meet an air interface resource needed by the directly obtained QoS parameter.

In a possible design, a size of an air interface resource reserved by a network side device based on the second QoS parameter is less than a size of an air interface resource reserved by the network side device based on the first QoS parameter.

According to a fourth aspect, a QoS parameter configuration method is provided. The method includes: receiving a first QoS parameter, where the first QoS parameter is determined based on a second QoS parameter and compressed-data information, and the compressed-data information indicates a proportion of compressed data or a proportion of non-compressed data in a transmitted unit data amount; and reserving an air interface resource based on the first QoS parameter, where the air interface resource is used for compressed data transmission.

Receiving the first QoS parameter and the reserving the air interface resource may be performed by a network side device, for example, may be performed by a RAN network element. With reference to analysis of beneficial effects of the first aspect, when the compressed-data information is considered during setting of the first QoS parameter, the RAN network element may reserve an air interface resource needed by the compressed data, to avoid a waste of the air interface resource.

For example, the air interface resource may be used by the RAN network element to receive a downlink data packet, perform a compression operation, and then send the downlink data packet to UE on the reserved air interface resource. The air interface resource may alternatively be used by the RAN network element to receive, on the reserved air interface resource, a compressed uplink data packet sent by UE.

In a possible design, a size of an air interface resource reserved by the network side device based on the first QoS parameter is less than a size of an air interface resource reserved by the network side device based on the second QoS parameter. Refer to the analysis of the beneficial effects of the first aspect. Because data compression exists during data transmission, a compressed data amount needs to occupy a small air interface resource. If a current data compression status is considered when a QoS parameter is delivered to the RAN network element, it is equivalent to that the first QoS parameter is set based on the current data compression status. When reserving the air interface resource based on the first QoS parameter, the RAN network element may reserve only an air interface resource needed by the compressed data amount, so that a problem of a resource waste caused by a preset size of a reserved air interface resource can be avoided.

In a possible design, receiving the first QoS parameter includes: receiving the first QoS parameter sent by an SMF network element. The first QoS parameter sent by the SMF network element may be received by the SMF network element from a TSCTSF network element, or may be received from a PCF network element. In other words, determining the first QoS parameter based on the second QoS parameter and the compressed-data information may be performed by the TSCTSF network element, or may be performed by the PCF network element.

According to a fifth aspect, a network device is provided. The network device includes a memory and a processor. The memory is coupled to the processor. The memory is configured to store computer program code. The computer program code includes computer instructions. A transceiver is configured to: receive data and send data. When the processor executes the computer instructions, the network device is enabled to perform the QoS parameter configuration method provided in any one of the first aspect or the corresponding possible designs of the first aspect.

According to a sixth aspect, this application provides a chip system. The chip system is used in a network device. The chip system includes one or more interface circuits and one or more processors. The interface circuit and the processor are interconnected through a line. The interface circuit is configured to: receive a signal from a memory of the network device, and send the signal to the processor. The signal includes computer instructions stored in the memory. When the processor executes the computer instructions, the network device performs the QoS parameter configuration method provided in the first aspect or the corresponding possible designs of the first aspect.

According to a seventh aspect, a communication apparatus is provided, including at least one processor. The at least one processor is connected to a memory, and the at least one processor is configured to read and execute a program stored in the memory, to enable the apparatus to perform the method according to the first aspect or any one of the first aspect.

According to an eighth aspect, an embodiment of this application provides a communication apparatus. The apparatus is included in an electronic device, and the apparatus has a function of implementing behavior of the electronic device in any one of the foregoing aspects and any one of the possible implementations. The function may be implemented by hardware, or may be implemented by hardware executing corresponding software. The hardware or the software includes one or more modules or units corresponding to the foregoing function, for example, a receiving module or unit and a sending module or unit.

According to a ninth aspect, an embodiment of this application provides a computer-readable storage medium, including computer instructions. When the computer instructions are run on an electronic device, the electronic device is enabled to perform the QoS parameter configuration method in any one of the foregoing aspects and any one of the possible implementations.

According to a tenth aspect, an embodiment of this application provides a computer program product. When the computer program product runs on a computer or a processor, the computer or the processor is enabled to perform the QoS parameter configuration method in any one of the foregoing aspects and any one of the possible implementations.

It may be understood that any network device, communication apparatus, chip system, computer-readable storage medium, computer program product, or the like provided above may be used in the corresponding method provided above. Therefore, for beneficial effects that can be achieved by the network device, the communication apparatus, the chip system, the computer-readable storage medium, the computer program product, or the like, refer to beneficial effects in the corresponding method. Details are not described herein again.

These aspects or other aspects in this application are more concise and comprehensible in the following descriptions.

**BRIEF DESCRIPTION OF DRAWINGS**

FIG. 1 is a diagram of a 5G QoS framework in a 5G system according to an embodiment of this application;

FIG. 2 is a schematic flowchart of establishing a GBR QoS flow according to an embodiment of this application;

FIG. 3 is a diagram of a system architecture of interworking between a 3GPP 5G system and a TSN system according to an embodiment of this application;

FIG. 4 is a diagram of packet transmission with a deterministic delay requirement according to an embodiment of this application;

FIG. 5 is a diagram of a system architecture of interworking between a 3GPP 5G system and a TSN system according to an embodiment of this application;

FIG. 6 is a diagram of a process in which an AF network element requests a QoS parameter in a TSC system according to an embodiment of this application;

FIG. 7 is a schematic flowchart of data packet transmission by using a compression padding amount as an example according to an embodiment of this application;

FIG. 8 is a diagram of a non-roaming architecture and a roaming architecture of a 5G system according to an embodiment of this application;

FIG. 9 is a schematic flowchart of a QoS parameter configuration method according to an embodiment of this application;

FIG. 10 is a diagram of signaling exchange of a QoS parameter configuration method according to an embodiment of this application;

FIG. 11 is a diagram of signaling exchange of a QoS parameter configuration method according to an embodiment of this application;

FIG. 12 is a diagram of signaling exchange of a QoS parameter configuration method according to an embodiment of this application;

FIG. 13 is a diagram of a structure of a network device according to an embodiment of this application; and

FIG. 14 is a diagram of a structure of a network device according to an embodiment of this application.

## DESCRIPTION OF EMBODIMENTS

The following describes technical solutions in embodiments of this application with reference to the accompanying drawings in embodiments of this application. In descriptions in embodiments of this application, "/" represents "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The terms "first" and "second" mentioned below are merely intended for a purpose of description, and cannot be understood as an indication or implication of relative importance or an implicit indication of a quantity of indicated technical features. Therefore, a feature limited by "first" or "second" may explicitly or implicitly include one or more features. In the descriptions of embodiments, unless otherwise specified, "a plurality of" means two or more.

Embodiments of this application may be applied to a scenario in which service interworking is performed between a 5th generation mobile communication technology (5th generation mobile communication technology, 5G) system and a time sensitive network (time sensitive network, TSN)/time sensitive communication (time sensitive communication, TSC) network, and in particular, may be applied to a scenario in which service interworking is performed between a 5G QoS framework and a TSN/TSC system.

The following first separately describes the 5G QoS framework and the TSN/TSC system.

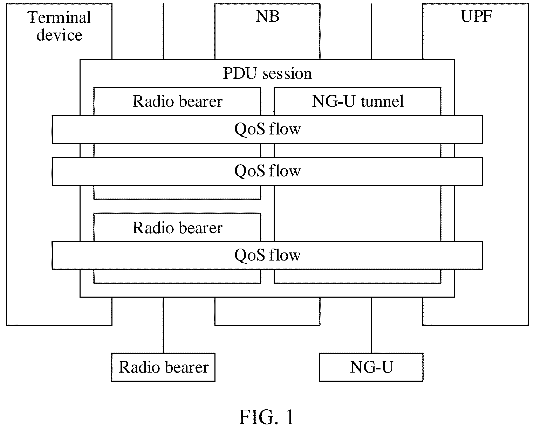

FIG. 1 is a diagram of a 5G QoS framework in a 5G system. The 5G QoS framework can ensure end-to-end quality of service of a service, supports a guaranteed bit rate (guaranteed bit rate, GBR) QoS flow (flow), which may be referred to as a GBR QoS flow, and supports a non-guaranteed bit rate QoS flow (Non-GBR QoS flow). Same transmission processing (such as scheduling and an admission threshold) may be performed on data packets controlled by using a same QoS flow.

Refer to FIG. 1. One terminal device may establish one or more packet data unit (packet data unit, PDU) sessions with a 5G network. The 5G network includes a base station (NodeB, NB) in an access network and a user plane (user plane function, UPF) network element in a core network. A radio bearer (radio bearer) may be established between the terminal device and the base station for communication, and a next generation-user plane tunnel (next generation-user plane tunnel, NG-U tunnel) (shown as an NG-U tunnel in the figure) may be established between the base station and the UPF for communication. One or more QoS flows may be established for each PDU session. Each QoS flow is identified by one QoS flow identifier (QoS flow identifier, QFI), and the QFI uniquely identifies one QoS flow in the session.

Whether a QoS flow is a GBR QoS flow or a non-GBR QoS flow is determined based on a corresponding QoS profile (profile).

A QoS profile corresponding to the GBR QoS flow includes the following QoS parameters: a 5G quality indication (5G quality indication, 5QI), an allocation and retention priority (allocation and retention priority, ARP), a guaranteed flow bit rate (guaranteed flow bit rate, GFBR), and a maximum flow bit rate (maximum flow bit rate, MFBR). Optionally, notification control (notification control) may be further included. In some scenarios, the GBR QoS flow may be further classified into a GBR QoS flow that needs notification control and a GBR QoS flow that does not need notification control based on whether the profile includes notification control. For the GBR QoS flow that requires notification control, when a radio access network detects that a corresponding QoS flow resource cannot be met, the radio access network notifies the core network, for example, a session management function (session management function, SMF) network element, of the event. Further, the SMF network element may initiate a QoS flow deletion procedure or a QoS flow modification procedure.

A QoS profile corresponding to the non-GBR QoS flow includes the following QoS parameters: a 5QI and an ARP. Optionally, a reflective QoS attribute (reflective QoS attribute, RQA) may be further included.

For definitions of the foregoing QoS parameters, refer to the following.

5QI: The 5QI is a scalar to be indexed to a corresponding 5G QoS feature. The 5G QoS feature includes, for example, packet delay budget (packet delay budget, PDB) and a packet error ratio (packet error ratio, PER). The 5QI is classified into a standardized 5QI, a preconfigured 5QI, and a dynamically allocated 5QI. Standardized 5QIs are in one-to-one correspondence with a group of standardized 5G QoS feature values. A 5G QoS feature value corresponding to the preconfigured 5QI is preconfigured on an access network node. A 5G QoS feature corresponding to the dynamically allocated 5QI is included in a QoS profile and sent to an AN network element.

ARP: The ARP includes a priority level, a preemption capability, and a preemption vulnerability.

Notification control: The notification control indicates whether the radio access network notifies a network when the GFBR cannot be met in a use period of the QoS flow.

GFBR: The GFBR represents a bit rate that is expected to be provided for the GBR QoS flow.

MFBR: The MFBR is used to limit a bit rate provided for the GBR QoS flow, that is, a maximum bit rate provided for the GBR QoS flow. If the maximum bit rate is exceeded, a data packet may be discarded.

RQA: The RQA indicates a reflective QoS parameter of a QoS parameter used by a service transmitted by using a corresponding QoS flow.

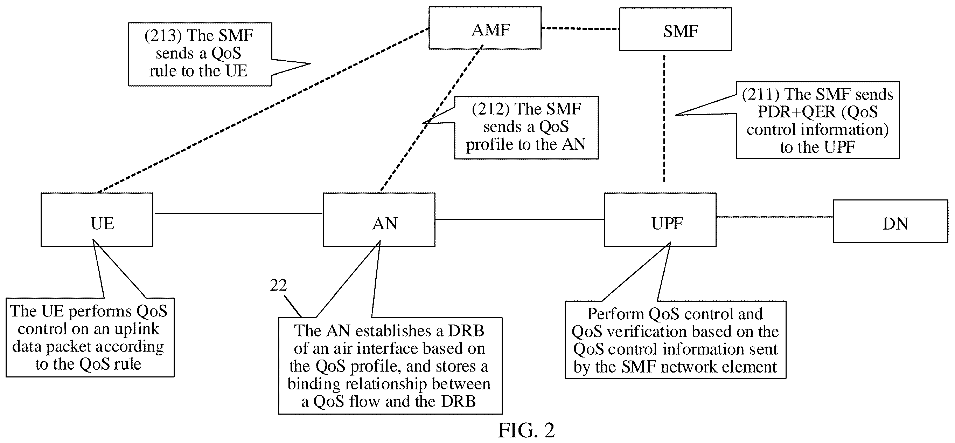

The GBR QoS flow is used as an example. FIG. 2 is a schematic flowchart of establishing a GBR QoS flow. The following procedure is included.

21: A session management function (session management function, SMF) network element determines to establish a QoS flow according to a local policy or a policy and charging control (policy and charging control, PCC) rule sent by a policy control function (policy control function, PCF) network element. Then, the following steps are performed. (211) The SMF sends a packet detection rule (packet detection rule, PDR) and a QoS enforcement rule (QoS enforcement rule, QER) to a UPF network element through an N4 interface, where the QoS enforcement rule includes QoS control information. (212) The SMF network element sends a QoS profile (including a QoS parameter) of the QoS flow to an access network (access network, AN) via an access and mobility management function (access and mobility management function, AMF) network element through an N1 interface. (213) The SMF network element sends the QoS rule to a terminal device, for example, user equipment (user equipment, UE), via the AMF network element and an AN network element, where the QoS rule includes the QoS control information.

22: Establish a QoS flow between the UE, the AN, and the UPF network element. The AN network element establishes a data radio bearer (data radio bearer, DRB) of an air interface based on the QoS profile, and stores a binding relationship between the QoS flow and the DRB.

The foregoing DRB and the binding relationship are applied. For downlink transmission, when receiving a downlink data packet, the UPF network element performs QoS control based on the QoS control information sent by the SMF network element, including including a QoS flow identifier in a data packet, and sends the downlink data packet to the AN network element via the UPF network element through an N3 interface. When receiving the downlink data packet, the AN network element includes, based on the QoS flow identifier in a packet header and a binding relationship between a QoS flow corresponding to the QoS flow identifier and the DRB, the downlink data packet in a corresponding DRB for transmission.

For uplink transmission, when determining to send an uplink data packet, the UE determines the QoS flow according to the QoS rule, includes a QoS flow identifier in a data packet header, and includes the uplink data packet in a corresponding DRB based on the binding relationship between the QoS flow and the DRB, to transmit the uplink data packet to the AN network element. When receiving the uplink data packet, the AN network element includes, based on the QoS flow identifier in the packet header through an N3 interface, the QoS flow identifier in the data packet header sent to the UPF network element. That is, the UE performs QoS control on the uplink data packet according to the QoS rule. When receiving the data packet sent by the AN network element, the UPF network element verifies whether a correct QoS flow is used for transmission in the data packet.

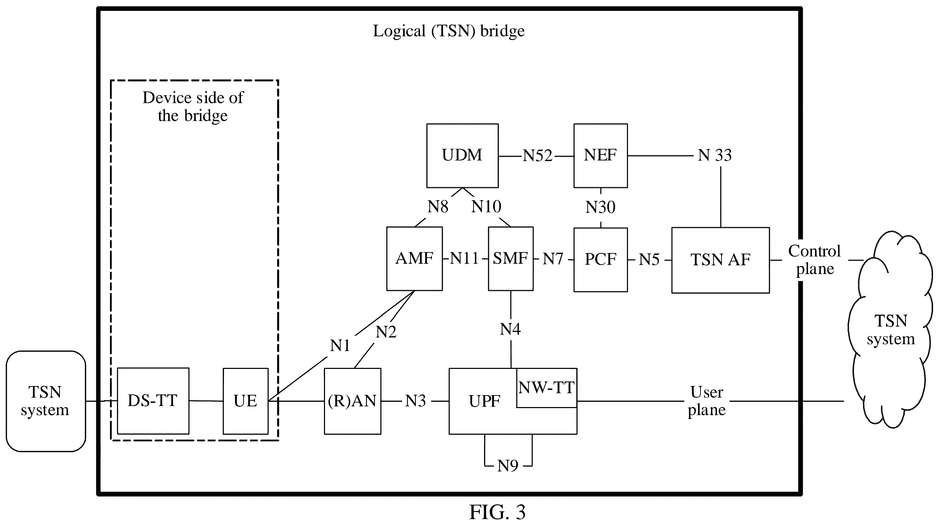

For a combination of a 5G system and a TSN system, FIG. 3 is a diagram of a system architecture of interworking between a 3GPP 5G system and a TSN system. Refer to FIG. 3. On a basis of FIG. 2, the 5G system further includes a unified data management (unified data management, UDM) network element, a network exposure function (network exposure function, NEF) network element, and the like. The 5G system and a TSN translator (translator) are used as a logical (TSN) bridge (bridge) as a whole. The 5G system exchanges information with a node in a TSN network, that is, a centralized network configuration (centralized network configuration, CNC) network element, by using a TSN translator on a control plane, that is, a TSN AF (application function, application function). The exchanged information includes capability information of a 5G system bridge, TSN configuration information, and time scheduling information and time synchronization information of TSN input and output ports. For a user plane, on a device side of the bridge (device side of the bridge), for a UE-side TSN translator, a terminal-side TSN translator (device-side TSN translator, DS-TT) may be located inside UE, or may be located outside UE. For a UPF-side translator, a network TSN translator (network TSN translator, NW-TT) is located inside a UPF network element.

The 5G system is used as a TSN bridge as a whole. The node CNC network element in the TSN system configures a sending time window and a flow periodicity for each TSN bridge based on information reported by the 5G system bridge and another bridge, to ensure a deterministic end-to-end (from a TSN talker (talker) to a TSN listener (listener)) delay.

For example, the user plane processes a downlink packet. After the packet is transmitted from the TSN system to the NW-TT, the NW-TT sends the packet to the DS-TT. The DS-TT sends the packet within preconfigured time based on the sending time window (that is, a gating control scheduling parameter) configured by the CNC network element. To ensure that the packet can be sent in time, the packet needs to arrive at the DS-TT before a preset value of sending time, and is buffered at the DS-TT to the sending time window.

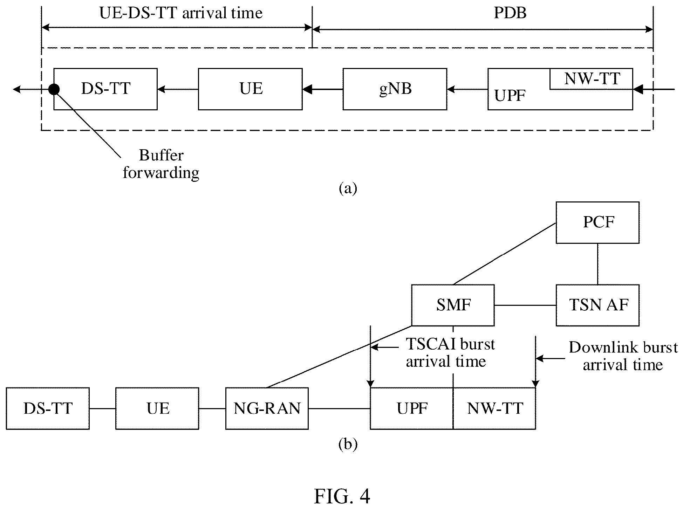

For a specific packet having a deterministic delay requirement, (a) in FIG. 4 is a diagram of buffer forwarding for delay deterministic transmission. The 5G system needs to determine a corresponding PDB based on a packet requirement, and ensure that transmission time of the packet between the UE and the UPF network element is not greater than the PDB. In other words, the packet arrives at the DS-TT in advance, so that the packet can catch up with the sending time window configured by the CNC.

(b) in FIG. 4 is a diagram of interconnection transmission between a 5G system and a TSN system. A black-box model is used. The CNC network element configures, based on a flow granularity, time of arrival at a 5GC and time of departure from the 5GC. Uncertainty caused by air interface transmission and wired transmission between the UE and the UPF network element is eliminated by the TSN translator through buffering. Specifically, the TSN AF network element determines, based on scheduling information of a TSN flow obtained from the CNC network element, time at which the TSN flow arrives at a 5G system ingress, to be specific, time at which the TSN flow arrives at an NW-TT ingress in a downlink direction (for example, downlink burst arrival time (DL Burst Arrival Time) in FIG. 4) and time at which the TSN flow arrives at a DS-TT ingress in an uplink direction. The TSN AF network element provides time information (included in a TSC assistance container (TSC assistance container, TSCAC)) for an SMF network element via a PCF network element. The SMF network element further calculates, based on the time information, time of arrival at a next generation-radio access network (next generation-radio access network, NG-RAN) in the downlink direction (for example, TSCAI burst arrival time (burst arrival time) in FIG. 4) and time of sending from the UE in the uplink direction, and provides the time as TSCAI information for a RAN for reference, so that a RAN node reserves a resource in advance. The SMF network element binds a specific service (a data flow) to a QoS flow. In other words, there is a correspondence between the QoS flow and a service data flow. For a TSN service, it is generally considered that a QoS flow is in one-to-one correspondence with a service data flow.

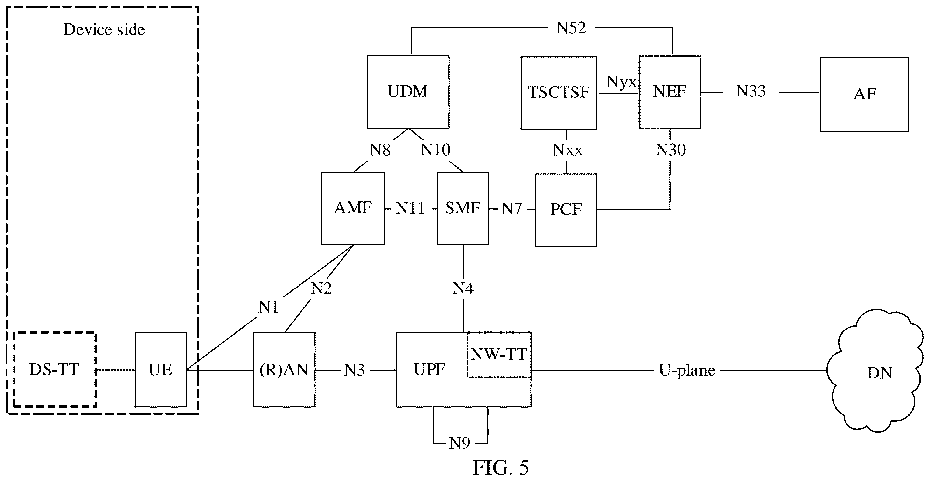

For a combination of the 5G system and a non-TSN TSC system, a time sensitive communication time synchronization function (time sensitive communication time synchronization function, TSCTSF) network element is added to support a clock synchronization service and enable a TSC service in a non-TSN scenario. FIG. 5 is a diagram of a system architecture of interworking between a 3GPP 5G system and a TSN system. Refer to FIG. 5. A TSCTSF network element may be coupled between a NEF network element and a PCF network element. Functions of the TSCTSF network element include:

associating a time synchronization service request from an AF network element with an AF session;

interacting with a DS-TT/NW-TT about a port management information container (port management information container, PMIC)/bridge management information container (bridge management information container, BMIC), and managing and controlling the DS-TT/NW-TT;

detecting availability of 5G system bridge or 5G system node information reported by the PCF network element;

creating a TSC assistance container (assistance container) based on a service type parameter provided by the AF/NEF network element, and providing the TSC assistance container for a PC, where for example, specifically, the AF sends a requested 5G system delay (Requested 5GS Delay) to the TSCTSF, and the TSCTSF subtracts UE-DS-TT residence time from the requested 5G system delay to generate a requested PDB (requested PDB), and sends the requested PDB to the PCF network element; and

determining a 5G system bridge delay (5GS bridge delay) based on UE-DS-TT residence time, and providing the 5G system bridge delay for the PCF network element.

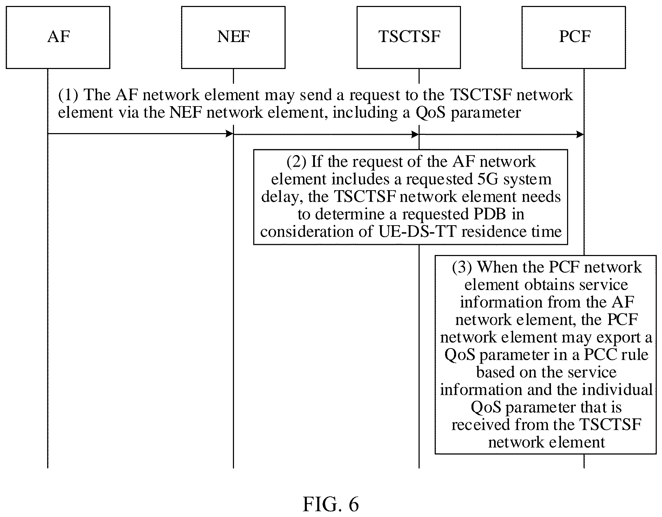

FIG. 6 is a diagram of a process in which an AF network element requests a QoS parameter in a TSC system. The following procedure may be included.

(1) The AF network element may send a request to a TSCTSF network element via a NEF network element, including: a QoS reference; and one or more of the following individual QoS parameters: a requested priority (requested priority), a maximum burst size (maximum burst size), a requested 5G system delay (requested 5GS delay), a requested maximum bit rate (requested maximum bit rate), and a requested guaranteed bit rate (requested guaranteed bit rate).

(2) If the request of the AF network element is sent via the TSCTSF network element, and the request includes the requested 5G system delay, the TSCTSF network element needs to determine a requested PDB in consideration of UE-DS-TT residence time.

(3) When a PCF network element obtains service information from the AF network element, the PCF network element may export a QoS parameter in a PCC rule based on the service information and the individual QoS parameter that is received from the TSCTSF network element. The PCF should select a standardized 5QI, a preconfigured 5QI, or an existing dynamically allocated 5QI that matches the individual QoS parameter. If there is no 5QI that matches the individual QoS parameter, the PCF generates a new dynamically allocated 5QI based on the individual QoS parameter. If a network status cannot meet a requirement, the PCF rejects the request, or sends a recommended 5QI to the TSCTSF network element/AF network element.

In addition, the AF network element may also subscribe to some events from the PCF network element.

When the 5G system and the TSN/TSC system are used in an industrial control scenario, a structure of a transmitted data packet may be shown in Table 1.

Table 1

| Ethernet packet header | Service data packet header | Status value | Switching value | Padding amount | Frame check sequence |
|---|---|---|---|---|---|

The service data packet header may include sequence number information, and indicates a sequence of service packets. The status value and the switching value are specific data at a service layer. Service data packet header+status valu+switching value may be collectively referred to as a valid payload. The padding amount is because a size of an ethernet frame is limited, for example, limited to 64 bytes (Bytes). In an industrial scenario, a valid payload usually cannot reach 64 bytes. Therefore, padding needs to be performed, so that the ethernet frame reaches 64 bytes.

Generally, frequency at which the status value and the switching value change is small. Data transmitted by a programmable logic controller (programmable logic controller, PLC) and an input/output (input/output, I/O) device in the industrial control scenario is used as an example. Table 2 shows an example of data content.

Table 2

| PLC | 0000010 |
|---|---|
| I/O device | 0001000 |

Both "0" and "1" in Table 2 mean the data content. Only when service content changes, the PLC or the I/O device needs to react and transmit new data content. For example, for the PLC, when the service content changes from "0000001" to " 0000010", new data packet transmission needs to be performed. Alternatively, for the I/O device, when the service content changes from "0000100" to "0001010", new data packet transmission needs to be performed. When the service content does not change, only an active state at the service layer needs to be maintained.

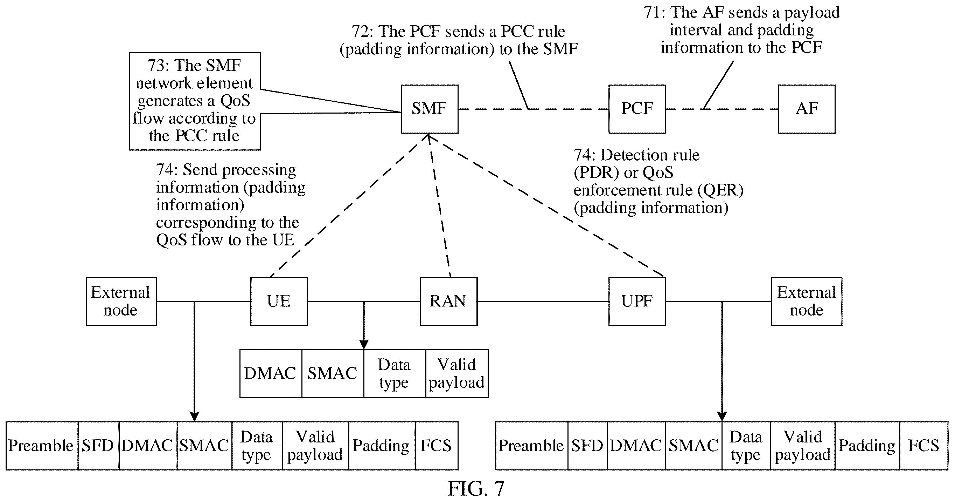

For the foregoing two cases, a mechanism for compressing user plane data based on a service feature is proposed. For example, UE (DS-TT) and a UPF network element (NW-TT) may compress a duplicate data packet and a padding amount part based on packet detection, and the duplicate data packet and the padding amount part are restored at a peer end. Packet detection may alternatively be performed based on a container (that is, a PMIC or a UMIC) delivered by the TSCTSF. FIG. 7 shows a data packet transmission procedure by using a transferred compressed padding amount as an example.

71: A network obtains, from an application, a field (referred to as a payload interval) of specific data transferred by the application to the network, including transferring padding information. An obtaining manner may be that an AF network element sends the payload interval to a PCF network element, or an AF network element sends the payload interval to a UDR network element (connected to a PCF network element) via a NEF network element. After a PDU session is established, the PCF network element obtains the payload interval from the UDR network element. Alternatively, an AF network element sends the payload interval to a PCF network element via a TSCTSF network element. Alternatively, a TSCTSF may directly send a container to UE and a UPF network element, where the container includes detection information, and the detection information indicates the payload interval.

72: The PCF network element sends a PCC rule to an SMF network element, where the PCC rule includes the detection information. The detection information includes one of the following content: the payload interval (for example, an offset) and the detection information.

73: The SMF network element generates a QoS flow according to the obtained PCC rule.

74: The SMF network element sends processing information (a compression or decompression operation) corresponding to the QoS flow to the UPF network element and the UE (and possibly a RAN network element). The SMF network element may send the processing information in a packet detection rule (PDR) or a QoS enforcement rule (QER) to the UPF network element.

When receiving a downlink data packet, the UPF network element/RAN network element may perform a decompression operation on the data packet and then send the data packet to the UE. Alternatively, when receiving an uplink data packet, the UE may compress a field in the received data packet and send the data packet to the RAN network element. For example, fields included in the uncompressed or decompressed uplink or downlink data packet include: a preamble (preamble), a start frame delimiter (start frame delimiter, SFD), a destination address (destination MAC, DMAC), a source address (source MAC, SMAC), a data type, a valid payload, a padding amount, and a frame check sequence (frame check sequence, FCS). Fields included after compression include the DMAC, the SMAC, the type, and the valid payload.

However, if a 5G system and a TSN/TSC system are used in combination, a QoS parameter is still provided based on an application of a current application. For the RAN network element, an air interface resource for transmission of a data packet between the RAN network element and the UE needs to be reserved, in other words, the RAN network element does not know a compression status of a data packet in a to-be-transmitted QoS flow. If a large quantity of bits in the QoS flow are compressed, a large quantity of resources in air interface resources that are reserved in the RAN network element and that correspond to the QoS parameter are wasted. For example, the RAN network element needs to reserve a GBR resource, and a resource waste of the reserved GBR resource may occur.

Therefore, in embodiments of this application, a QoS parameter configuration method and a network element are provided. In the method, the TSCTSF network element, the PCF network element, or the like may set a QoS parameter based on compressed-data information in a requested service. When the RAN network element finally receives the QoS parameter determined based on the compressed-data information, if an air interface resource is reserved based on the QoS parameter, the air interface resource can match the QoS parameter determined based on the compressed-data information, to avoid a waste of the air interface resource caused by resource reservation performed by the RAN.

In this application, embodiments of this application may be applied to a plurality of 5G system architectures, for example, may be applied to a service-oriented 5G system, and a reference point-based non-roaming architecture or roaming architecture of a 5G system.

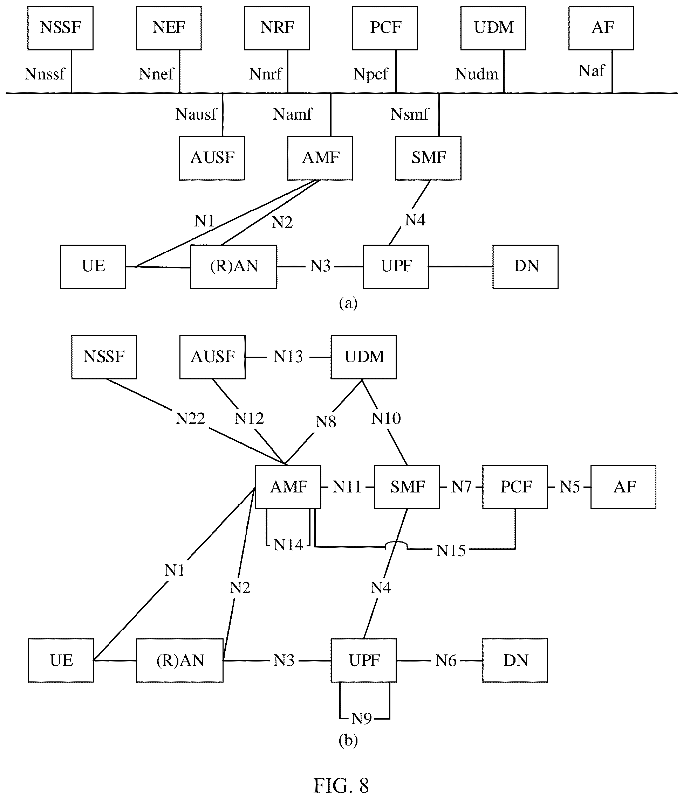

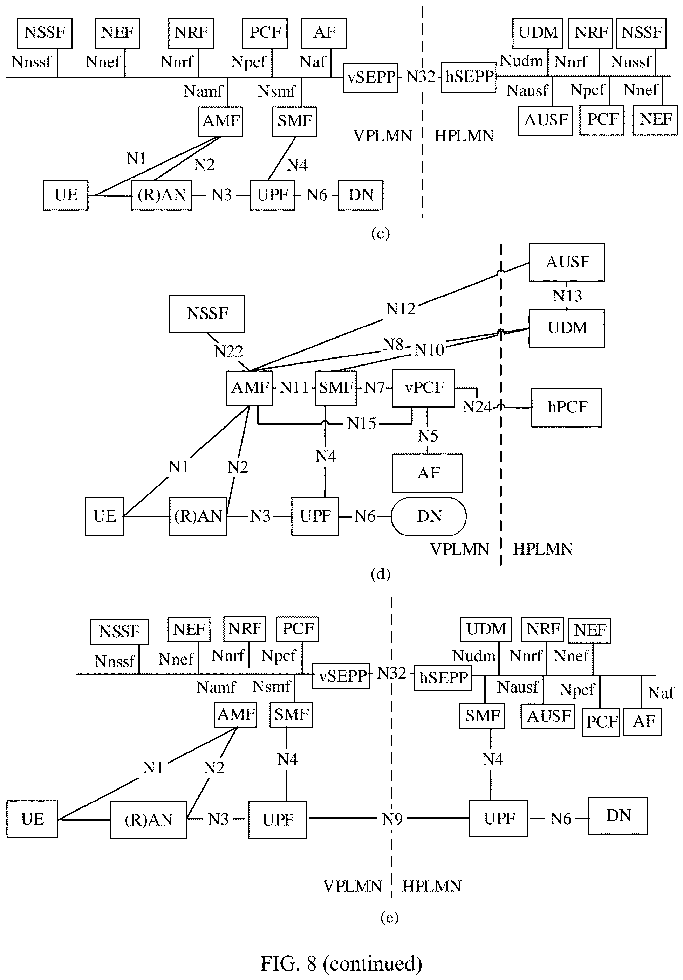

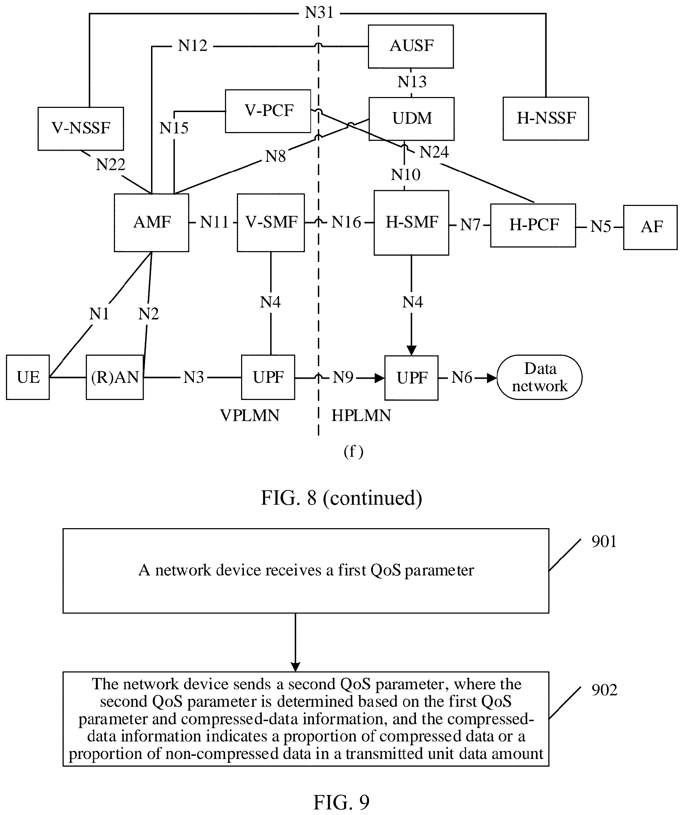

(a) in FIG. 8 is a diagram of a service-oriented 5G system and a reference point-based non-roaming architecture. The architecture includes a network slice selection function (network slice selection function, NSSF) network element, a NEF network element, a network repository function (network repository function, NRF) network element, a PCF network element, a UDM network element, an AF network element, an authentication server function (authentication server function, AUSF) network element, an AMF network element, an SMF network element, UE and a RAN network element that communicate with the AMF through an N1 interface, and a UPF network element that communicates with the SMF network element through an N4 interface. A (R)AN network element communicates with and the UPF network element through an N3 interface, and the UPF network element communicates with a data network (data network, DN) network element through an N6 interface. Interfaces of a core network include an Nnssf interface, an Nnef interface, an Nnrf interface, an Npcf interface, a Nudm interface, a Naf interface, a Nausf interface, a Namf interface, an Nsmf interface, N1, N2, N3, N4, and the like.

(b) in FIG. 8 is a diagram of a service-oriented 5G system and another reference point-based non-roaming architecture. A NEF network element and an NRF network element are removed from the architecture. Nx shown in (b) in FIG. 8 represents an interface, and x represents an interface sequence number. For example, interfaces include an N13 interface, an N22 interface, and the like.

(c) in FIG. 8 is a diagram of a roaming architecture of a 5G system in service-oriented local breakout (local breakout, LBO). In this scenario, a home public land mobile network (home public land mobile network, HPLMN) and a visited public land mobile network (visited public land mobile network, VPLMN) are included. A service needs to be offloaded in the VPLMN, that is, a DN is on a VPLMN side. The VPLMN includes a security edge protection proxy (security edge protection proxy, vSEPP) network element, and the HPLMN includes an hSEPP network element. The vSEPP network element communicates with the hSEPP network element through an N32 interface.

(d) in FIG. 8 is a diagram of a roaming architecture of a 5G system in reference point-based LBO. A VPLMN includes a vPCF, an HPLMN includes an hPCF, and the vPCF communicates with the hPCF through an interface N24. In this embodiment of this application, a PCF network element interacting with an SMF network element may be a PCF network element serving a PDU session, and is located in the VPLMN in this case.

Embodiments of this application may be further applicable to a 5G system architecture in a roaming scenario in service-oriented home routed (home routed, HR). (e) in FIG. 8 is a diagram of a roaming architecture of a 5G system in service-oriented HR. In comparison with the architecture shown in (c) in FIG. 8, in a roaming scenario in the service-oriented HR, a service needs to be offloaded on an HPLMN side, that is, a DN is in an HPLMN, and an AF network element and an SMF network element are also in the HPLMN. The HPLMN further includes a UPF network element. A UPF in the VPLMN communicates with the UPF in the HPLMN through an N9 interface. In this embodiment of this application, a PCF network element interacting with the SMF network element may be a PCF network element serving a PDU session, and is located in the HPLMN in this case.

Embodiments of this application may be further applicable to a 5G system architecture in a roaming scenario in reference point-based HR. (f) in FIG. 8 is a diagram of a reference point-based roaming architecture of a 5G system. In comparison with the architecture shown in (d) in FIG. 8, in a roaming scenario in reference point-based HR, a service needs to be offloaded on an HPLMN side, that is, a DN is in an HPLMN, and an AF network element is in the HPLMN. A VPLMN includes a V-SMF network element, the HPLMN includes an H-SMF network element, and the V-SMF network element communicates with the H-SMF network element through an N18 interface. Both the VPLMN and the HPLMN include a UPF network element. A UPF network element in the VPLMN communicates with a UPF network element in the HPLMN through an N9 interface.

This application is not limited to being applicable only to the foregoing network architecture, and may be further applicable to a 5G system architecture in another scenario.

For a position of a TSCTSF network element in the 5G architecture in embodiments of this application, refer to a diagram of a system architecture of interworking between a 5G system and a TSN system shown in FIG. 5.

The architecture of the 5G system includes two parts: an access network and a core network. The access network is configured to implement a function related to radio access performed by a terminal device. The core network mainly includes the following key network elements/network devices: an AMF network element, an SMF network element, a UPF network element, a PCF network element, a UDM network element, and the like.

In this application, the terminal device may be UE, a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, or another device that can access a network. The terminal device and an access network device communicate with each other by using an air interface technology.

(R)AN device: The (R)AN device is a network device that provides access for the terminal device, and includes a RAN device and an AN device. The RAN device is mainly a 3GPP network wireless network device, and the AN may be an access network device defined in non-3GPP. The RAN device is mainly responsible for functions such as radio resource management, QoS management, and data compression and encryption on an air interface side. The RAN device may include base stations in various forms, for example, a macro base station, a micro base station (which is also referred to as a small cell), a relay station, and an access point. In systems using different radio access technologies, a device having a function of a base station may be named differently. For example, the device is referred to as a RAN or a gNB (5G NodeB) in the 5G system, referred to as an evolved NodeB (evolved NodeB, eNB or eNodeB) in an LTE system, and referred to as a NodeB (NodeB) in a 3rd generation (3rd generation, 3G) system.

AMF network element: The AMF network element is mainly responsible for mobility management in a mobile network, such as user position update, registration of a user with a network, and user switching.

SMF network element: The SMF network element is mainly responsible for session management in a mobile network, for example, session establishment, modification, and release. Specific functions are, for example, allocating an IP address to the user and selecting a UPF that provides a packet forwarding function.

UPF network element: The UPF network element is responsible for forwarding and receiving user data in the terminal device. The UPF network element may receive the user data from a data network, and transmit the user data to the terminal device through the access network device. The UPF network element may further receive the user data from the terminal device through the access network device, and forward the user data to the data network. A transmission resource and a scheduling function that are used by the UPF network element to provide a service for the terminal device are managed and controlled by the SMF network element.

PCF network element: The PCF network element mainly supports providing a unified policy framework to control network behavior, and providing a policy rule for a control layer network function, and is responsible for obtaining policy decision-related subscription information of a subscriber.

NEF network element: The NEF network element is mainly for capability supporting and event exposure.

AF network element: The AF network element mainly supports interacting with a 3GPP core network to provide a service, for example, affecting a data routing decision and a policy control function, or providing some third-party services for a network side.

UDM network element: The UDM network element is configured to: generate an authentication credential, process a subscriber identifier (for example, store and manage a subscription permanent identifier), control access authorization, manage subscription data, and the like.

DN: The DN is a service network that provides a data transmission service for a user, for example, an IMS (IP multi-media service, IP multi-media service) and an Internet.

In some scenarios, the UE accesses the data network DN by using a PDU (packet data unit, packet data unit) session established between the UE and the DN.

After the network architecture in this application is understood, the following describes embodiments of this application.

FIG. 9 is a schematic flowchart of a QoS parameter configuration method according to an embodiment of this application. The method includes the following procedure.

901: A network device receives a first QoS parameter.

902: The network device sends a second QoS parameter, where the second QoS parameter is determined based on the first QoS parameter and compressed-data information, and the compressed-data information indicates a proportion of compressed data or a proportion of non-compressed data in a transmitted unit data amount.

In some embodiments, the network device may be a PCF network element or a TSCTSF network element, or may be another network element. This is not limited in this application.

In some embodiments, this embodiment of this application may be applied to any architecture of the 5G system shown in FIG. 8.

In some scenarios, this embodiment of this application may be applied to a process of configuring a QoS profile for a GBR QoS flow in a 5G system. The QoS profile includes a QoS parameter. The QoS parameter may include a 5QI, an ARP, a GFBR, an MFBR, and the like. For details, refer to the process descriptions of FIG. 1 and FIG. 2.

In some embodiments, this embodiment of this application may be applied to a scenario in which data transmission is performed in a 5G system in combination with a TSN/TSC system. In this scenario, an AF network element may request a QoS parameter from a TSCTSF network element via a NEF network element. For details, refer to the process descriptions shown in FIG. 3, FIG. 4, FIG. 5, and FIG. 6.

In some embodiments, this embodiment of this application may be applied to an industrial control scenario, and transmitted data may be a data packet in the industrial scenario. In this scenario, a duplicate data packet and a padding amount part may be compressed based on packet detection and then transmitted. For an access network element, for example, a RAN network element, after establishing a DRB based on a received QoS parameter, a base station may reserve, for transmission of compressed data, an air interface resource that matches the received QoS parameter. For details, refer to the process descriptions shown in FIG. 7.

In some embodiments, if the second QoS parameter is determined based on the compressed-data information, when the network device sends the second QoS parameter, it is equivalent to that the second QoS parameter is determined based on a current data compression status. If the second QoS parameter is delivered to the RAN network element, the RAN network element may reserve an air interface resource based on the second QoS parameter. In comparison with a conventional technology in which a resource waste of an air interface resource may occur because the RAN network element cannot learn of a data size of a to-be-transmitted QoS flow in advance and reserves an air interface resource merely based on a preconfigured air interface resource size, in this application, during QoS parameter configuration on the RAN network element, QoS guarantee is provided after QoS parameter adjustment is performed based on current compressed-data information. For example, the RAN network element needs to reserve a GBR air interface resource. If the second QoS parameter received by the RAN network element is obtained through adjustment based on the compressed-data information, the GBR air interface resource reserved by the RAN network element can provide QoS guarantee, and the GBR air interface resource can be saved.

In some embodiments, when step 901 and step 902 are performed by the PCF network element, receiving the first QoS parameter includes: The PCF network element receives a request sent by the AF network element, where the request includes the first QoS parameter. The compressed-data information may be sent by a network element other than the AF network element, for example, an SMF network element, to the PCF network element.

In some embodiments, the request sent by the AF may further include the compressed-data information. In this way, the PCF network element may directly determine the second QoS parameter based on the first QoS parameter and the compressed-data information that are received from the AF network element. The second QoS parameter may be used by the RAN network element to determine an air interface resource that matches the second QoS parameter.

In some embodiments, when step 901 and step 902 are performed by the TSCTSF network element, receiving the first QoS parameter includes: The TSCTSF network element receives a request sent by the AF network element, where the request includes the first QoS parameter and the compressed-data information. Sending the second QoS parameter includes: The TSCTSF network element sends the second QoS parameter to a policy control function PCF network element. If the PCF network element authorizes the second QoS parameter, the PCF network element may send the second QoS parameter to the RAN network element via the AF network element.

If the PCF network element cannot authorize the second QoS parameter when receiving the second QoS parameter, in some embodiments, the method further includes: The TSCTSF network element receives a third QoS parameter that is recommended by the PCF and sent by the PCF network element; and the TSCTSF network element sends a fourth QoS parameter to the AF network element, where the fourth QoS parameter is determined based on the compressed-data information and the third QoS parameter. In other words, the TSCTSF network element may determine the fourth QoS parameter based on the recommended third QoS parameter and the compressed-data information, and then send the fourth QoS parameter to the RAN network element via the AF network element.

In some embodiments, before the PCF network element receives the first QoS parameter sent by the AF network element, the method may further include: The PCF network element receives the compressed-data information sent by the SMF network element or a UPF network element. In other words, the compressed-data information may be notified by the SMF network element or the UPF network element to the PCF network element, so that the PCF network element determines the second QoS parameter based on the compressed-data information and the first QoS parameter that is received from the AF network element, and then sends the second QoS parameter to the RAN network element.

In some embodiments, before the PCF network element receives the compressed-data information, the method may further include: The PCF network element sends a trigger indication to the SMF network element, where the trigger indication indicates the SMF network element to perform notification when the compressed-data information changes. In this case, the SMF network element may subscribe to the compressed-data information from the UPF network element. The UPF network element may directly report the compressed-data information to the PCF network element when the compressed-data information meets a condition, or the UPF network element reports the compressed-data information to the PCF network element via the SMF network element.

Alternatively, the PCF network element may directly subscribe to the compressed-data information from the UPF network element. Therefore, in some embodiments, before compressed data information sent by the UPF network element is received, the method further includes: The PCF network element sends a subscription indication to the UPF network element, where the subscription indication indicates the UPF network element to perform reporting when the compressed-data information meets the condition.

In some embodiments, that the PCF network element sends the second QoS parameter after obtaining the second QoS parameter may include: The PCF network element sends the second QoS parameter to the SMF network element. The SMF network element may send the second QoS parameter to the RAN network element.

In some embodiments, if the SMF network element sends the second QoS parameter to the RAN network element when the SMF network element receives the second QoS parameter, but the RAN network element detects that a QoS flow resource corresponding to the second QoS parameter cannot be met, the RAN network element may notify the SMF network element that the SMF network element needs to perform a QoS flow modification procedure. Therefore, the method may further include: The PCF network element receives a fifth QoS parameter sent by the SMF network element, where the fifth QoS parameter includes a QoS parameter obtained by the SMF network element by adjusting the second QoS parameter; and the PCF network element sends a sixth QoS parameter to the AF network element, where the sixth QoS parameter is determined based on the fifth QoS parameter and the compressed-data information. The AF network element may send the sixth QoS parameter to the RAN network element.

In some embodiments, when step 901 and step 902 are performed by the PCF network element, if a seventh QoS parameter obtained by the PCF network element based on the first QoS parameter and the compressed-data information cannot be authorized, the PCF network element may send, to the AF network element, the SMF network element, or the like, the second QoS parameter recommended by the PCF. In other words, the second QoS parameter is a QoS parameter recommended when the seventh QoS parameter cannot be authorized after the seventh QoS parameter is determined based on the first QoS parameter and the compressed-data information.

In some embodiments, in this embodiment of this application, the proportion of the compressed data is a proportion of a quantity of compressed bits in a single data packet to a quantity of bits in the single data packet.

Alternatively, the proportion of the compressed data is a proportion of a quantity of compressed bits in one data burst volume to a quantity of bits in the one data burst volume.

Alternatively, the proportion of the compressed data is a proportion of a quantity of data packets that are repeatedly transmitted in a preset time window to a total quantity of data packets.

Correspondingly, the proportion of the non-compressed data is a proportion of a quantity of uncompressed bits in a single data packet to a quantity of bits in the single data packet.

Alternatively, the proportion of the non-compressed data is a proportion of a quantity of uncompressed bits in one data burst volume to a quantity of bits in the one data burst volume.

Alternatively, the proportion of the non-compressed data is a proportion of a quantity of data packets that are not repeatedly transmitted in a preset time window to a total quantity of data packets.

Definitions of the proportion of the compressed data and the proportion of the non-compressed data are not limited in this application.

For example, if transmission of the compressed-data information is performed between the PCF network element and the TSCTSF network element, the proportion of the compressed data/the proportion of the non-compressed data may be a data transmission status of a business/service data function (service data function, SDF) or a service. The SDF is a database of an intelligent network, and may provide user and network data.

For example, the proportion of the compressed data is a proportion of a quantity of compressed bits in a single data packet to a quantity of bits in the single data packet in one SDF or one service.

If transmission of the compressed-data information is performed between the SMF network element and the PCF network element, the proportion of the compressed data/the proportion of the non-compressed data may be a data transmission status in one QoS flow.

For example, the proportion of the compressed data is a proportion of a quantity of compressed bits in a single data packet to a quantity of bits in the single data packet in one QoS flow.

Certainly, this application is not limited to the descriptions of the proportion of the compressed data/the proportion of the non-compressed data in the foregoing example.

Based on the foregoing descriptions, it can be learned that, from a perspective of a network element that provides the compressed-data information, the AF network element may provide the compressed-data information when sending the first QoS parameter, or another network element, for example, the SMF network element or the UPF network element, may provide the compressed-data information. The second QoS parameter determined based on the first QoS parameter and the compressed-data information may finally be responded to the AF network element, so that the AF network element provides the second QoS parameter for the RAN network element.

Therefore, embodiments of this application further provide a quality of service QoS parameter configuration method. The method includes the following steps.

A network device sends a first QoS parameter and compressed-data information.

The network device receives a second QoS parameter, where the second QoS parameter is determined based on the first QoS parameter and the compressed-data information, and the compressed-data information indicates a proportion of the compressed data or a proportion of the non-compressed data in a transmitted unit data amount.

The network device may be an AF network element.

In some embodiments, sending the first QoS parameter includes: The AF network element sends a request to a TSCTSF network element, where the request includes the first QoS parameter and the compressed-data information. The TSCTSF network element may obtain the second QoS parameter based on the first QoS parameter and the compressed-data information, and request a PCF network element to authorize the second QoS parameter.

In some embodiments, if the PCF cannot authorize the QoS parameter obtained based on the first QoS parameter and the compressed-data information, the PCF may send, to the TSCTSF network element, a third QoS parameter recommended by the PCF network element. The TSCTSF network element may obtain the second QoS parameter through calculation based on the third QoS parameter and the compressed-data information, and send the second QoS parameter to the AF network element. Therefore, receiving the second QoS parameter may include: The AF network element receives the second QoS parameter sent by the TSCTSF network element.

In some embodiments, sending the first QoS parameter includes: The AF network element sends a request to a PCF network element, where the request includes the first QoS parameter and the compressed-data information. The PCF obtains the second QoS parameter based on the first QoS parameter and the compressed-data information, and determines whether to authorize the second QoS parameter.

In some embodiments, receiving the second QoS parameter includes: The AF network element receives the second QoS parameter sent by the PCF network element. In this case, the second QoS parameter may be a QoS parameter that is directly obtained by the PCF network element based on the first QoS parameter and the compressed-data information and that can be authorized, or may be a QoS parameter that is recommended by the PCF network element and that is obtained by the PCF network element based on the first QoS parameter and the compressed-data information.

As the foregoing plurality of QoS parameter configuration processes are learned, the following further describes the foregoing plurality of QoS parameter configuration processes.

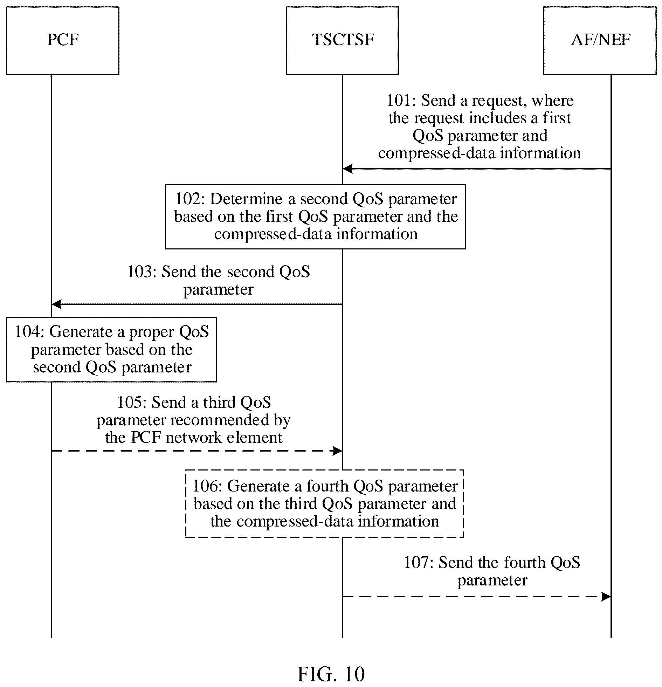

FIG. 10 is a diagram of signaling exchange of a QoS parameter configuration method according to an embodiment of this application. The method includes the following procedure.

101: An AF network element/a NEF network element sends a request to a TSCTSF network element, where the request includes a first QoS parameter and compressed-data information.

Correspondingly, the TSCTSF network element receives the request sent by the AF network element or the NEF network element.

In some embodiments, the AF network element is used as a control node of a service requirement. Before service data transmission or in a service data transmission process, the AF network element may send the request to the TSCTSF network element, to request a QoS parameter.

For example, the AF network element sends the request to the NEF network element, and the NEF network element sends the request to the TSCTSF network element, or the AF network element directly sends the request to the TSCTSF network element.

In some embodiments, the first QoS parameter includes a maximum burst size (maximum burst size), a requested maximum bit rate (requested maximum bit rate), a requested guaranteed bit rate (requested guaranteed bit rate), and the like.

When the compressed-data information is a proportion of compressed data, the proportion of the compressed data may be a proportion of a quantity of compressed bits in a single data packet to a quantity of bits in the single data packet in one QoS flow. Alternatively, the proportion of the compressed data is a proportion of a quantity of compressed bits in one data burst (burst) volume to a quantity of bits in the one data burst volume in one QoS flow.

For example, the quantity of compressed bits in the one data burst volume may be, for example, a quantity of bits occupied by padding (padding) bits in the one data burst volume.

Alternatively, the proportion of the compressed data is a proportion of a quantity of duplicate data packets that are transmitted in a time window to a total quantity of data packets that are transmitted in the time window in one QoS flow.

Correspondingly, when the compressed-data information is a proportion of non-compressed data, the proportion of the non-compressed data=1-the proportion of the compressed data.

For example, the proportion of the non-compressed data may be a proportion of a quantity of uncompressed bits in a single data packet to a quantity of bits in the single data packet in one QoS flow. Alternatively, the proportion of the compressed data is a proportion of a quantity of uncompressed bits in one data burst (burst) volume to a quantity of bits in the one data burst volume in one QoS flow.

For example, the quantity of uncompressed bits in the one data burst volume may be, for example, a quantity of bits occupied by bits of a valid payload (payload) in the one data burst volume. The valid payload includes a data packet header, a status value, and a switching value in a service data packet.

Alternatively, the proportion of the non-compressed data is a proportion of a quantity of non-duplicate data packets that are transmitted in a time window to a total quantity of data packets that are transmitted in the time window in one QoS flow.

102: The TSCTSF network element determines a second QoS parameter based on the first QoS parameter and the compressed-data information.

In some embodiments, the second QoS parameter may include a requested maximum data burst volume (requested maximum data burst volume, requested MDBV), a requested maximum bit rate (requested maximum bit rate, requested MBR), and a requested guaranteed bit rate (requested guaranteed bit rate, requested GBR).

For example, if the compressed-data information includes the proportion of the compressed data:

$$\text{requested MDBV} = (1-\text{proportion of compressed data})*\text{maximum burst size};$$

$$\text{requested MBR} = (1-\text{proportion of compressed data})*\text{requested maximum bit rate};$$

and

$$\text{requested GBR} = (1-\text{proportion of compressed data})*\text{requested guaranteed bit rate}.$$

If the compressed-data information includes the proportion of the non-compressed data:

$$\text{requested MDBV} = \text{proportion of non-compressed data}*\text{maximum burst size};$$

$$\text{requested MBR} = \text{proportion of non-compressed data}*\text{requested maximum bit rate};$$

and

$$\text{requested GBR} = \text{proportion of non-compressed data}*\text{requested guaranteed bit rate}.$$

In addition, the TSCTSF network element may further generate another QoS parameter based on the first QoS parameter and the compressed-data information, for example, a requested PDB and/or a requested packet error rate (packet error rate, PER) and/or a requested 5GS delay.

A manner in which the TSCTSF network element determines the second QoS parameter based on the first QoS parameter and the compressed-data information is not limited in this application.

103: The TSCTSF network element sends the second QoS parameter to a PCF network element.

Correspondingly, the PCF network element receives the second QoS parameter sent by the TSCTSF network element.

104: The PCF network element generates a proper QoS parameter based on the second QoS parameter. For example, a PCC rule generated by the PCF includes the QoS parameter.

The calculated QoS parameter may be the same as the second QoS parameter, or may be different from the second QoS parameter.

The following uses an example in which the QoS parameter calculated by the PCF network element is the same as the second QoS parameter for description.

In some embodiments, the PCF network element exports, based on service information obtained from the AF network element and the second QoS parameter determined by the PCF network element, a preconfigured 5QI or an existing dynamically allocated 5QI that matches the second QoS parameter and that is in the PCC rule, or when there is no 5QI that matches the second QoS parameter, the PCF generates a new dynamically allocated 5QI based on the second QoS parameter. Then, the PCF network element may obtain the proper QoS parameter, where the proper QoS parameter includes parameters such as a 5QI, an MBR, an MDBV, and a GBR. The parameters such as the MBR, the MDBR, and the GBR may be the requested MDBV, the requested MBR, and the requested GBR in the second QoS parameter.

Then, the PCF network element authorizes the proper QoS parameter obtained based on the second QoS parameter, and may send the proper QoS parameter to the AF/NEF network element via the TSCTSF network element. The AF network element may send the proper QoS parameter to a RAN network element, so that the RAN network element may reserve an air interface resource that just meets the proper QoS parameter, for example, a GBR resource.

105: When the PCF network element cannot authorize the second QoS parameter, the PCF network element sends, to the TSCTSF network element, a third QoS parameter recommended by the PCF network element.

Correspondingly, the TSCTSF network element receives the third QoS parameter sent by the PCF network element.

In some embodiments, if determining that a network status cannot meet the second QoS parameter, the PCF network element determines that the second QoS parameter cannot be authorized. In this case, the PCF network element may obtain the recommended third QoS parameter. The third QoS parameter includes a 5QI recommended by the PCF network element based on the network status, and recommended QoS parameters such as a requested MDBV', a requested MBR', and a requested GBR'.

106: The TSCTSF network element generates a fourth QoS parameter based on the third QoS parameter and the compressed-data information.

In some embodiments, the fourth QoS parameter may include a maximum burst size', a requested maximum bit rate', and a requested guaranteed bit rate'.

$$\text{maximum burst size'} = \text{requested MDBV'}/(1-\text{proportion of compressed data});$$

$$\text{requested maximum bit rate'} = \text{requested MBR'}/(1-\text{proportion of compressed data});$$

and

$$\text{requested guaranteed bit rate'} = \text{requested GBR'}/(1-\text{proportion of compressed data}).$$

Alternatively, maximum burst size' = requested MDBV'/proportion of non-compressed data;

$$\text{requested maximum bit rate'} = \text{requested MBR'}/\text{proportion of non-compressed data};$$

and

$$\text{requested guaranteed bit rate'} = \text{requested GBR'}/\text{proportion of non-compressed data}.$$

In addition, the TSCTSF network element may further generate another QoS parameter based on the third QoS parameter and the compressed-data information, for example, a requested PDB and/or a requested PER and/or a requested 5GS delay.

A manner of generating the fourth QoS parameter based on the third QoS parameter and the compressed-data information is not limited in this application.

107: The TSCTSF network element sends the fourth QoS parameter to the AF/NEF network element.

Correspondingly, the AF/NEF network element receives the fourth QoS parameter sent by the TSCTSF network element.

For example, the TSCTSF network element sends the fourth QoS parameter to the NEF network element, and the NEF network element sends the fourth QoS parameter to the RAN network element. The NEF network element may further send the fourth QoS parameter to the AF network element, so that the AF network element can sense the actually used fourth QoS parameter, to adjust a service requirement.

Therefore, in this embodiment of this application, in a scenario in which a 5G system architecture is in combination with TSC, the TSCTSF network element may determine the proper QoS parameter based on the compressed-data information received from the AF network element, so that the PCF network element may authorize the QoS parameter determined based on the compressed-data information, for example, based on the proportion of the compressed data. In this way, when reserving an air interface resource, the RAN network element may adjust a size of the reserved air interface resource based on the received QoS parameter that is determined based on the proportion of the compressed data, to avoid a resource waste caused by reservation based on a specified air interface resource size. For example, when reserving a GBR resource, the RAN network element may reserve the GBR resource based on the QoS parameter that is determined based on the proportion of the compressed data in this application, to avoid a waste of the GBR resource.

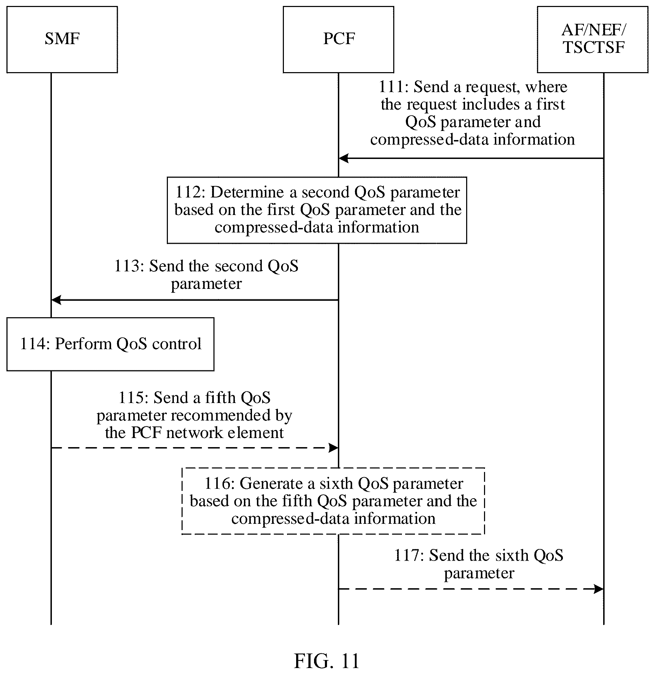

FIG. 11 is a diagram of signaling exchange of a QoS parameter configuration method according to an embodiment of this application. The method includes the following procedure.

111: An AF network element/a NEF network element/a TSCTSF network element sends a request to a PCF network element, where the request includes a first QoS parameter and compressed-data information.

Correspondingly, the PCF network element receives the request sent by the AF/NEF/TSCTSF network element.

For example, the AF network element is used as a control node of a service requirement. Before service data transmission or in a service data transmission process, the AF network element may send the request to the NEF network element, the NEF network element sends the request to the TSCTSF network element, and the TSCTSF network element sends the request to the PCF network element. The first QoS parameter included in the request may include the foregoing maximum burst size, requested maximum bit rate, and requested guaranteed bit rate. The compressed-data information may be the proportion of the compressed data or the proportion of the non-compressed data in the foregoing embodiment. For details, refer to the descriptions of step 101.

112: The PCF network element generates a second QoS parameter based on the compressed-data information and the first QoS parameter.

For a process in which the PCF network element generates the second QoS parameter based on the compressed-data information and the first QoS parameter, refer to the process in which the TSCTSF network element generates the second QoS parameter based on the compressed-data information and the first QoS parameter in step 102. Details are not described herein again.

A difference is that the second QoS parameter generated by the PCF network element in step 112 is directly generated by the PCF based on the first QoS parameter and the compressed-data information that are from the request of the AF network element, and the second QoS parameter may be represented as an MDBV, an MBR, and a GBR. In this case, the second QoS parameter may be represented as:

$$MDBV=(1-\text{proportion of compressed data})*\text{maximum burst size};$$

$$MBR=(1-\text{proportion of compressed data})*\text{requested maximum bit rate};$$

and

$$GBR=(1-\text{proportion of compressed data})*\text{requested guaranteed bit rate}.$$

Alternatively, $MDBV=\text{proportion of non-compressed data}*\text{maximum burst size};$

$$MBR=\text{proportion of non-compressed data}*\text{requested maximum bit rate};$$

and

$$GBR=\text{proportion of non-compressed data}*\text{requested guaranteed bit rate}.$$

In addition, the PCF network element may further generate another QoS parameter based on the first QoS parameter and the compressed-data information, for example, a PDB and/or a PER and/or a 5GS delay.

A manner in which the PCF network element determines the second QoS parameter based on the first QoS parameter and the compressed-data information is not limited in this application.

113: The PCF network element sends the second QoS parameter to an SMF network element.

Correspondingly, the SMF network element receives the second QoS parameter sent by the PCF network element.

114: The SMF network element performs QoS control, and sends the second QoS parameter to a RAN network element and/or a UPF network element.

Correspondingly, the RAN network element and/or the UPF network element receive/receives the second QoS parameter sent by the SMF network element.

In some embodiments, after the SMF network element sends the second QoS parameter to a radio access network, for example, the RAN network element, if the RAN network element detects that a QoS flow resource corresponding to the second QoS parameter can be met, the RAN network element may notify the SMF network element that the SMF network element does not need to perform a QoS flow modification procedure. The RAN network element may reserve an air interface resource based on the second QoS parameter. When receiving the second QoS parameter, the UPF network element may also provide a transmission resource for serving a terminal device.

Optionally, if the SMF network element learns, from a radio access network side, that the QoS flow resource corresponding to the second QoS parameter cannot be met, after step 113, the SMF network element may initiate a QoS flow modification procedure. The method may further include the following steps.

115: The SMF network element sends a fifth QoS parameter to the PCF network element, where the fifth QoS parameter includes a QoS parameter obtained by the SMF network element by adjusting the second QoS parameter.

Correspondingly, the PCF network element receives the fifth QoS parameter sent by the SMF network element.

For example, in an alternative QoS scenario, if the SMF network element determines that the second QoS parameter needs to be modified, the SMF network element may obtain an alternative QoS parameter, namely, the fifth QoS parameter, based on the second QoS parameter, and then send the alternative QoS parameter to the PCF network element. Specifically, the SMF network element may obtain, from a QoS notification sent by the RAN network element to the SMF network element, an alternative QoS profile (or a reference of the alternative QoS profile) that can be accepted by the RAN network element. Further, the SMF may further send, to the PCF network element, the alternative QoS profile (or the reference of the alternative QoS profile) that can be accepted by the RAN network element.

In some embodiments, the SMF network element may adjust, based on the QoS flow modification procedure, the received second QoS parameter based on resource occupation on a RAN network element side, and the fifth QoS parameter is obtained through adjustment. The fifth QoS parameter includes an MDBV', an MBR', and a GBR' that are obtained by the SMF network element through adjustment. Then, the SMF network element may send the request to the PCF network element, where the request includes the fifth QoS parameter.

116: The PCF network element generates a sixth QoS parameter based on the compressed-data information and the fifth QoS parameter.

In some embodiments, it is assumed that examples of the sixth QoS parameter are a maximum burst size', a requested maximum bit rate', and a requested guaranteed bit rate'. The sixth QoS parameter may be represented as:

$$\text{maximum burst size'} = \text{MDBV'}/(1-\text{proportion of compressed data});$$

$$\text{requested maximum bit rate'} = \text{MBR'}/(1-\text{proportion of compressed data});$$

and

$$\text{requested guaranteed bit rate'} = \text{GBR'}/(1-\text{proportion of compressed data}).$$

Alternatively, maximum burst size' = MDBV'/proportion of non-compressed data;

$$\text{requested maximum bit rate'} = \text{MBR'}/\text{proportion of non-compressed data};$$

and

$$\text{requested guaranteed bit rate'} = \text{GBR'}/\text{proportion of non-compressed data}.$$

In addition, the PCF network element may further generate another QoS parameter based on the fifth QoS parameter and the compressed-data information, for example, a requested PDB and/or a requested PER and/or a requested 5GS delay.

117: The PCF network element sends the sixth QoS parameter to the AF/NEF/TSCTSF network element.

Correspondingly, the AF/NEF/TSCTSF network element receives the sixth QoS parameter sent by the PCF network element.

For example, the PCF network element may send the sixth QoS parameter to the TSCTSF network element, the TSCTSF network element sends the sixth QoS parameter to the NEF network element, and the NEF network element sends the sixth QoS parameter to the AF network element. The AF network element may send the sixth QoS parameter to the RAN network element, and the RAN network element may reserve an air interface resource that matches the sixth QoS parameter.

Therefore, in this embodiment of this application, in a scenario in which a 5G system architecture is in combination with TSC, the PCF network element may determine a proper QoS parameter based on the compressed-data information received from the AF network element and authorize the proper QoS parameter to the RAN network element. In this way, when reserving an air interface resource, the RAN network element may adjust a size of the reserved air interface resource based on the received QoS parameter that is determined based on the proportion of the compressed data, to avoid a resource waste caused by reservation based on a specified air interface resource size. For example, when reserving a GBR resource, the RAN network element may reserve the GBR resource based on the QoS parameter that is determined based on the proportion of the compressed data in this application, to avoid a waste of the GBR resource.

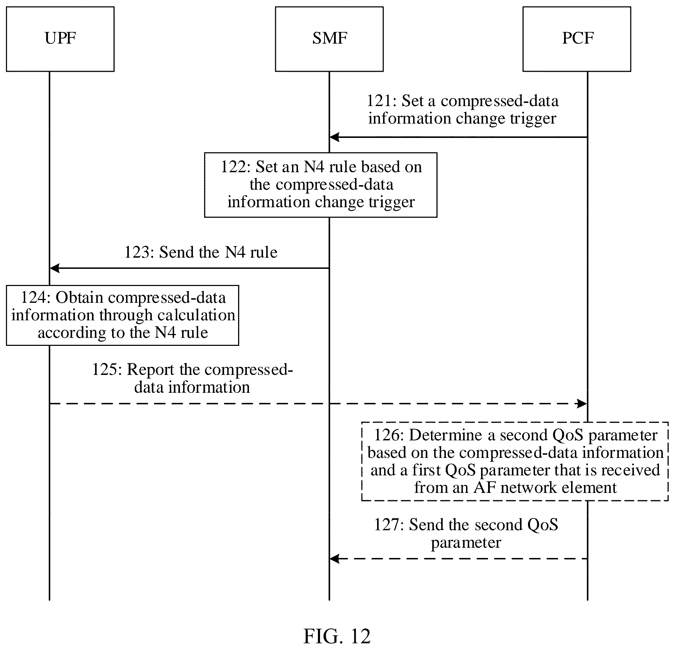

FIG. 12 is a diagram of signaling exchange of a QoS parameter configuration method according to an embodiment of this application. The method includes the following procedure.

121: A PCF network element sets a compressed-data information change trigger for an SMF network element.

In some embodiments, the compressed-data information change trigger may be understood as that the SMF network element needs to notify the PCF network element when learning that compressed-data information changes. This is equivalent to that the PCF network element sends a trigger indication to the SMF network element, where the trigger indication indicates the SMF to notify the PCF of changed compressed-data information when the compressed-data information changes.

For an implementation of the compressed-data information, refer to the descriptions of step 101.

In some embodiments, when setting the trigger for the SMF network element, the PCF network element may further set, for the SMF, a threshold for reporting the compressed-data information. In other words, when the compressed-data information changes and reaches the threshold, the PCF network element is notified.

For example, when the compressed-data information is a proportion of compressed data, the threshold may be understood as a threshold of the proportion of the compressed data.

122: The SMF network element sets an N4 rule based on the compressed-data information change trigger, where the N4 rule is used to subscribe to the compressed-data information from a UPF network element.

The UPF is a 5G user plane network element, and high-speed reliable data transmission provided by a 5G network for a user needs to be implemented at a core network layer via the UPF network element. The UPF network element is connected to the SMF network element through an N4 interface. The SMF network element delivers various data forwarding control commands and data forwarding policy rules to the UPF through the N4 interface. The UPF sequentially forwards data of different service levels.

In some embodiments, setting the N4 rule by the SMF network element in this application is equivalent to adding a new function to the N4 interface between the UPF network element and the SMF network element. In other words, when the SMF network element receives the compressed-data information change trigger or the trigger indication, the SMF network element may set the new N4 rule, to subscribe to the compressed-data information from the UPF network element. The subscribed compressed-data information includes, for example, compressed-data information related to an MDBV, an MBR, and a GBR, that is, information used to determine parameters such as the MDBV, the MBR, and the GBR. For example, the subscribed compressed-data information includes the foregoing proportion of the compressed data or proportion of the non-compressed data.

In some embodiments, the new N4 rule may further include the threshold for reporting the compressed-data information.

123: The SMF network element sends the N4 rule to the UPF network element.

Correspondingly, the UPF network element receives the N4 rule sent by the SMF network element.

In other words, the SMF network element sends the N4 rule to the UPF network element through the N4 interface.

124: The UPF network element obtains the compressed-data information through calculation according to the N4 rule.

In some embodiments, when receiving the new N4 rule, the UPF network element may obtain a data packet or one data burst volume in a time window for transmitting one QoS flow, and obtain the compressed-data information through calculation. For the compressed-data information, refer to the descriptions of step 101.

125: The UPF network element reports the compressed-data information to the SMF network element, and the SMF network element reports the compressed-data information to the PCF network element.

Correspondingly, the SMF network element receives the compressed-data information sent by the UPF network element, and the PCF network element receives the compressed-data information sent by the SMF network element.

In some embodiments, if the compressed-data information is the proportion of the compressed data, when the proportion of the compressed data obtained by the UPF through calculation reaches the threshold, the proportion of the compressed data may be sent to the SMF network element based on a preset periodicity. For example, when the threshold is 20%, if the proportion of the compressed data is greater than or equal to 20%, the UPF network element sends the proportion of the compressed data to the SMF network element based on the preset periodicity. In this case, it is considered that a quantity of bits that can be compressed is large, which is more conducive to saving an air interface resource of an access network element.

When receiving the compressed-data information, the SMF network element may further report the compressed-data information to the PCF network element.

In some embodiments, after the UPF network element is servitized, after the UPF network element receives the new N4 rule from the SMF network element, if the UPF network element determines that the compressed-data information meets a condition (for example, the proportion of the compressed data reaches the threshold), the UPF may directly and periodically send the compressed-data information to the PCF network element without using the SMF network element.

In some embodiments, after the UPF network element is servitized, alternatively, the PCF network element may directly send a subscription indication to the UPF network element (without using the SMF network element). The subscription indication indicates the UPF network element to perform reporting when the compressed-data information meets a condition (for example, the proportion of the compressed data reaches the threshold). In this way, when determining that the compressed-data information meets the condition, the UPF network element directly and periodically reports the compressed-data information to the PCF network element.

126: The PCF network element determines a second QoS parameter based on the compressed-data information and a first QoS parameter that is received from an AF network element.

In some embodiments, when receiving the first QoS parameter requested by the AF network element, the PCF network element may determine the second QoS parameter based on the first QoS parameter and latest compressed-data information that is received from the UPF network element.

For example, the first QoS parameter includes a maximum burst size, a requested maximum bit rate, and a requested guaranteed bit rate, and the second QoS parameter includes an MDBV, an MBR, and a GBR. The second QoS parameter may be represented as:

$$MDBV=(1-proportion\ of\ compressed\ data)*maximum\ burst\ size;$$

$$MBR=(1-proportion\ of\ compressed\ data)*requested\ maximum\ bit\ rate;$$

and

$$GBR=(1-proportion\ of\ compressed\ data)*requested\ guaranteed\ bit\ rate.$$

Alternatively, MDBV=proportion of non-compressed data*maximum burst size;

$$MBR=proportion\ of\ non\text{-}compressed\ data*requested\ maximum\ bit\ rate;$$

and

$$GBR=proportion\ of\ non\text{-}compressed\ data*requested\ guaranteed\ bit\ rate.$$

In addition, the PCF network element may further generate another QoS parameter based on the first QoS parameter and the compressed-data information, for example, a PDB and/or a PER and/or a 5GS delay.

When obtaining the second QoS parameter through calculation, the PCF network element may determine, based on a current network status, whether the second QoS parameter can be authorized. If the second QoS parameter can be authorized, step 127 is performed.

In this embodiment, because the PCF network element monitors, from the UPF network element in real time, compressed-data information in a current QoS flow, when the PCF network element receives the first QoS parameter requested by the AF network element, it is equivalent that the PCF network element optimizes the first QoS parameter based on the compressed-data information, to obtain the second QoS parameter, where the second QoS parameter can be authorized.

127: The PCF network element sends the second QoS parameter to the SMF network element.

Correspondingly, the SMF network element receives the second QoS parameter sent by the PCF network element.

When the SMF network element receives the second QoS parameter, the SMF network element may deliver the second QoS parameter to the access network element, for example, a RAN network element, and the RAN network element may reserve an air interface resource based on the second QoS parameter.

In some embodiments, the PCF network element may further notify the AF network element of the second QoS parameter, so that the AF network element can sense a QoS parameter in actual use, and the AF network element may adjust a service requirement based on the received QoS parameter. For example, if a value of the GBR in the second QoS parameter is less than a value of the requested guaranteed bit rate in the first QoS parameter, the AF may learn that a guaranteed bit rate needed for the current QoS flow is reduced, and the AF network element may, for example, reduce a service priority.

Therefore, in this embodiment of this application, in a scenario in which a 5G system architecture is in combination with TSC, the PCF network element may determine a proper QoS parameter based on the compressed-data information received from the UPF network element and authorize the proper QoS parameter to the RAN network element. In this way, when reserving an air interface resource, the RAN network element may adjust a size of the reserved air interface resource based on the received QoS parameter that is determined based on the proportion of the compressed data, to avoid a resource waste caused by reservation based on a specified air interface resource size. For example, when reserving a GBR resource, the RAN network element may reserve the GBR resource based on the QoS parameter that is determined based on the proportion of the compressed data in this application, to avoid a waste of the GBR resource.

In some embodiments, embodiments of this application may be further applied to a communication system after 5G, for example, a 6G communication system.

In some embodiments, an alternative (alternative) QoS mechanism is introduced to reduce signaling exchange caused by a QoS parameter change. In this mechanism, the AF/NEF/TSCTSF network element may provide a plurality of sets of QoS parameter requirements. For example, after the PCF network element delivers a PCC rule including a plurality of alternative quality of service parameter sets (alternative QoS parameter sets) to the SMF network element, the RAN network element or the SMF network element may upgrade or degrade a QoS parameter based on a network status (for example, congestion). In other words, embodiments of this application are further applicable to a case in which the PCC rule includes a plurality of sets of QoS parameters.

For example, the PCC rule includes three parameter sets (parameter set). The three parameter sets (parameter set 1, parameter set 2, and parameter set 3) included in the PCC rule are as follows:

parameter set 1={Rank 1: PDB value=x1, RN, GBR=y1, MBR=z1} (i.e. highest QoS level);

parameter set 2={Rank 2: PDB value=x2, RN, GBR=y2, MBR=z2} (i.e. medium QoS level); and parameter set 3={Rank 3: PDB value=x3, RN, GBR=y3, MBR=z3} (i.e. lowest QoS level).

The foregoing example indicates values of QoS parameters (a PDB, a GBR, and an MBR) included in each parameter set, and shows levels of the three parameter sets when the three parameter sets are alternative. The parameter set 1 is a highest-level QoS parameter, the parameter set 2 is a medium-level QoS parameter, and the parameter set 3 is a lowest-level QoS parameter.

The SMF network element may generate, according to the PCC rule of the plurality of levels of QoS parameters, a "special" QoS flow with a plurality of QoS profiles (profile). For example, a new QoS profile of the QoS flow may include:

QoS profile 1={Rank 1: PDB value=x1, RN, GBR=y1, MBR=z1} (i.e.highest QoS level);

QoS profile 2={Rank 2: PDB value=x2, RN, GBR=y2, MBR=z2} (i.e. medium QoS level); and QoS profile 3={Rank 3: PDB value=x3, RN, GBR=y3, MBR=z3} (i.e. lowest QoS level).

The QoS parameter configuration methods shown in FIG. 9 to FIG. 12 in this application are equivalent to adjustment of one set of QoS parameters. If it is extended to the PCC rule of the plurality of levels of QoS parameters, in this application, the foregoing configuration process may be performed on each set of QoS parameters according to the QoS parameter configuration method in the foregoing embodiments. In other words, any requested QoS parameter in the plurality of sets of QoS parameters may be adjusted based on the compressed-data information.

In addition, it should be noted that although QoS parameters most related to a bandwidth capacity are parameters such as an MBR, a GBR, and an MDBV, other QoS parameters such as a PDB and a PER may be affected. For example, with a same resource being used, a delay of transmitting a large data packet may be greater than a delay of transmitting a small data packet. Therefore, in embodiments of this application, another QoS parameter may also be authorized according to the QoS parameter configuration method in the foregoing embodiments. For example, the PDB and the PER may be authorized.

It may be understood that, to implement the foregoing functions, a network device includes corresponding hardware and/or a corresponding software module for performing each function. With reference to algorithm steps of examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions with reference to embodiments for each particular application, but it should not be considered that the implementation goes beyond the scope of this application.

In embodiments, functional modules of the network device may be obtained through division based on the foregoing method examples. For example, each functional module may be obtained through division corresponding to each function, or two or more functions may be integrated into one processing module. The integrated module may be implemented in a form of hardware. It should be noted that division into the modules in embodiments is an example and is merely logical function division. During actual implementation, there may be another division manner.

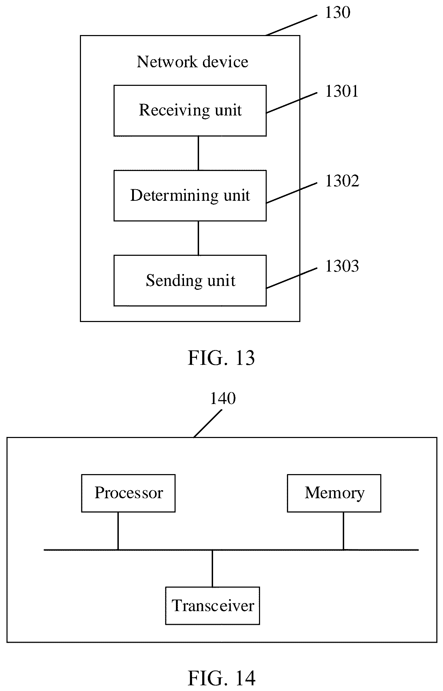

When each functional module is obtained through division corresponding to each function, FIG. 13 is a diagram of possible composition of a network device 130 in the foregoing embodiments. As shown in FIG. 13, the network device 130 may include a receiving unit 1301, a determining unit 1302, and a sending unit 1303. The network device 130 may be, for example, a TSCTSF network element or a PCF network element, or may be another network element that can determine a QoS parameter based on compressed-data information. This is not limited in this application.

The receiving unit 1301 may be configured to: support the network device 130 in performing corresponding processes of step 901, step 111, and step 115, and the like, and/or another process used for a technology described in this specification.

The determining unit 1302 may be configured to: support the network device 130 in performing step 102, step 106, step 112, step 116, step 126, and the like, and/or another process used for the technology described in this specification.

The sending unit 1303 may be configured to: support the network device 130 in performing step 902, step 103, step 107, step 113, step 117, step 121, step 127, and the like, and/or another process used for the technology described in this specification.

It should be noted that all related content of the steps in the foregoing method embodiments may be cited in function descriptions of corresponding functional modules. Details are not described herein again.

The network device 130 provided in this embodiment is configured to perform the foregoing QoS parameter configuration method, and therefore can achieve a same effect as the foregoing implementation method.

When an integrated unit is used, the network device 130 may include a processing module, a storage module, and a communication module. The processing module may be configured to control and manage an action of the network device 130, for example, may be configured to support the network device 130 in performing the steps performed by the determining unit 1302. The storage module may be configured to support the network device 130 in storing program code, data, and the like. The communication module may be configured to support an electronic device 1100 in communicating with another device, for example, communicating with a radio access device, and may be configured to support the network device 130 in performing the steps performed by the receiving unit 1301 and the sending unit 1303.

The processing module may be a processor or a controller. The processing module may implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device that interacts with another electronic device, for example, a radio frequency circuit, a Bluetooth chip, or a Wi-Fi chip.

In an embodiment, when the processing module is a processor, the storage module is a memory, and the communication module is a transceiver, the electronic device in this embodiment may be a network device 140 having a structure shown in FIG. 14.

An embodiment of this application further provides an electronic device, including one or more processors and one or more memories. The one or more memories are coupled to the one or more processors, and the one or more memories are configured to store computer program code. The computer program code includes computer instructions. When the one or more processors execute the computer instructions, the electronic device is enabled to perform the foregoing related method steps, to implement the QoS parameter configuration method in the foregoing embodiments.

An embodiment of this application further provides a computer storage medium. The computer storage medium stores computer instructions. When the computer instructions are run on an electronic device, the electronic device is enabled to perform the foregoing related method steps, to implement the QoS parameter configuration method in the foregoing embodiments.

An embodiment of this application further provides a computer program product. When the computer program product runs on a computer, the computer is enabled to perform the foregoing related steps, to implement the QoS parameter configuration method performed by the electronic device in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the QoS parameter configuration method performed by the electronic device in the foregoing method embodiments.

The electronic device, the computer storage medium, the computer program product, or the chip provided in embodiments is configured to perform the corresponding method provided above. Therefore, for beneficial effects that can be achieved, refer to beneficial effects of the corresponding method provided above. Details are not described herein again.

Another embodiment of this application provides a communication system. The system may include the radio access device, the TSCTSF network element, the PCF network element, the AF network element, and the like, and may be configured to implement the foregoing QoS parameter configuration method.

Based on the descriptions of the foregoing implementations, a person skilled in the art may understand that, for a purpose of convenient and brief description, division into the foregoing functional modules is merely used as an example for description. During actual application, the foregoing functions may be allocated to different functional modules and implemented based on a requirement. In other words, an inner structure of an apparatus is divided into different functional modules to implement all or some of the functions described above.

In several embodiments provided in this application, it should be understood that the disclosed apparatus and method may be implemented in other manners. For example, the described apparatus embodiment is merely an example. For example, the module or division into the units is merely logical function division and there may be another division manner during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed on different places. Some or all of the units may be selected based on an actual requirement to achieve objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to a conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing content is merely specific implementations of this application, but is not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

### Claims

1. A quality of service QoS parameter configuration method, wherein the method comprises:

   receiving a first QoS parameter; and
   sending a second QoS parameter, wherein the second QoS parameter is determined based on the first QoS parameter and compressed-data information, and the compressed-data information indicates a proportion of compressed data or a proportion of non-compressed data in a transmitted unit data amount.

2. The method according to claim 1, wherein a size of an air interface resource reserved by a network side device based on the second QoS parameter is less than a size of an air interface resource reserved by the network side device based on the first QoS parameter.

3. The method according to claim 1 or 2, wherein the receiving the first QoS parameter comprises:
receiving a request sent by an application function AF network element, wherein the request comprises the first QoS parameter.

4. The method according to claim 3, wherein the request further comprises the compressed-data information.

5. The method according to any one of claims 1 to 4, wherein the sending the second QoS parameter comprises:
sending the second QoS parameter to a policy control function PCF network element.

6. The method according to claim 5, wherein the method further comprises:

   receiving a third QoS parameter that is recommended by the PCF network element and sent by the PCF network element; and
   sending a fourth QoS parameter to the AF network element, wherein the fourth QoS parameter is determined based on the compressed-data information and the third QoS parameter.

7. The method according to claim 3, wherein before receiving the first QoS parameter, the method further comprises:
receiving the compressed-data information sent by a session management function SMF network element or a user plane function UPF network element.

8. The method according to claim 7, wherein before receiving the compressed-data information, the method further comprises:
sending a trigger indication to the SMF network element, wherein the trigger indication indicates the SMF network element to perform notification when the compressed-data information changes.

9. The method according to claim 7, wherein before receiving the compressed data information sent by the UPF network element, the method further comprises:
sending a subscription indication to the UPF network element, wherein the subscription indication indicates the UPF network element to perform reporting when the compressed-data information meets a condition.

10. The method according to any one of claims 7 to 9, wherein the sending the second QoS parameter comprises:
sending the second QoS parameter to the session management function SMF network element.

11. The method according to claim 10, wherein the method further comprises:

   receiving a fifth QoS parameter sent by the SMF network element, wherein the fifth QoS parameter comprises a QoS parameter obtained by the SMF network element by adjusting the second QoS parameter; and
   sending a sixth QoS parameter to the AF network element, wherein the sixth QoS parameter is determined based on the fifth QoS parameter and the compressed-data information.

12. The method according to any one of claims 1 to 11, wherein

   the proportion of the compressed data is a proportion of a quantity of compressed bits in a single data packet to a quantity of bits in the single data packet;
   the proportion of the compressed data is a proportion of a quantity of compressed bits in one data burst volume to a quantity of bits in the one data burst volume; or
   the proportion of the compressed data is a proportion of a quantity of data packets that are repeatedly transmitted in a preset time window to a total quantity of data packets transmitted in the preset time window.

13. The method according to any one of claims 1 to 11, wherein

   the proportion of the non-compressed data is a proportion of a quantity of uncompressed bits in a single data packet to a quantity of bits in the single data packet;
   the proportion of the non-compressed data is a proportion of a quantity of uncompressed bits in one data burst volume to a quantity of bits in the one data burst volume; or
   the proportion of the non-compressed data is a proportion of a quantity of data packets that are not repeatedly transmitted in a preset time window to a total quantity of data packets transmitted in the preset time window.

14. A communication apparatus, comprising:

a receiving unit, configured to receive a first QoS parameter; and
a sending unit, configured to send a second QoS parameter, wherein the second QoS parameter is determined based on the first QoS parameter and compressed-data information, and the compressed-data information indicates a proportion of compressed data or a proportion of non-compressed data in a transmitted unit data amount.

15. The communication apparatus according to claim 14, wherein a size of an air interface resource reserved by a network side device based on the second QoS parameter is less than a size of an air interface resource reserved by the network side device based on the first QoS parameter.

16. The communication apparatus according to claim 14 or 15, wherein the receiving unit is configured to:
receive a request sent by an application function AF network element, wherein the request comprises the first QoS parameter.

17. The communication apparatus according to claim 16, wherein the request further comprises the compressed-data information.

18. The communication apparatus according to any one of claims 14 to 17, wherein the sending unit is configured to:
send the second QoS parameter to a policy control function PCF network element.

19. The communication apparatus according to claim 18, wherein the receiving unit is further configured to receive a third QoS parameter that is recommended by the PCF and sent by the PCF network element; and
the sending unit is further configured to send a fourth QoS parameter to the AF network element, wherein the fourth QoS parameter is determined based on the compressed-data information and the third QoS parameter.

20. The communication apparatus according to claim 16, wherein the receiving unit is further configured to:
receive the compressed-data information sent by an SMF network element or a user plane function UPF network element.

21. The communication apparatus according to claim 20, wherein the sending unit is further configured to:
send a trigger indication to the SMF network element, wherein the trigger indication indicates the SMF network element to perform notification when the compressed-data information changes.

22. The communication apparatus according to claim 20, wherein the sending unit is further configured to:
send a subscription indication to the UPF network element, wherein the subscription indication indicates the UPF network element to perform reporting when the compressed-data information meets a condition.

23. The communication apparatus according to any one of claims 20 to 22, wherein the sending unit is further configured to:
send the second QoS parameter to the session management function SMF network element.

24. The communication apparatus according to claim 23, wherein the receiving unit is further configured to receive a fifth QoS parameter sent by the SMF network element, wherein the fifth QoS parameter comprises a QoS parameter obtained by the SMF network element by adjusting the second QoS parameter; and
the sending unit is further configured to send a sixth QoS parameter to the AF network element, wherein the sixth QoS parameter is determined based on the fifth QoS parameter and the compressed-data information.

25. The communication apparatus according to any one of claims 14 to 24, wherein

the proportion of the compressed data is a proportion of a quantity of compressed bits in a single data packet to a quantity of bits in the single data packet;
the proportion of the compressed data is a proportion of a quantity of compressed bits in one data burst volume to a quantity of bits in the one data burst volume; or
the proportion of the compressed data is a proportion of a quantity of data packets that are repeatedly transmitted in a preset time window to a total quantity of data packets transmitted in the preset time window.

26. The communication apparatus according to any one of claims 14 to 24, wherein

the proportion of the non-compressed data is a proportion of a quantity of uncompressed bits in a single data packet to a quantity of bits in the single data packet;
the proportion of the non-compressed data is a proportion of a quantity of uncompressed bits in one data burst volume to a quantity of bits in the one data burst volume; or
the proportion of the non-compressed data is a proportion of a quantity of data packets that are not repeatedly transmitted in a preset time window to a total quantity of data packets transmitted in the preset time window.

27. A computer-readable storage medium, comprising computer instructions, wherein when the computer instructions are run on an electronic device, the electronic device is enabled to perform the method according to any one of claims 1 to 13.

28. A chip, wherein the chip stores computer-executable instructions, and when the computer-executable instructions are run, the method according to any one of claims 1 to 13 is performed.

| Terminal device | | NB | | UPF |
|---|---|---|---|---|

PDU session

| Radio bearer | NG-U tunnel |
|---|---|

QoS flow

QoS flow

Radio bearer

QoS flow

QoS flow

| Radio bearer | | NG-U |
|---|---|---|

FIG. 1

(213) The SMF
sends a QoS
rule to the UE

AMF - - - - - - - - - SMF

(211) The SMF sends
PDR+QER (QoS
control information)
to the UPF

(212) The SMF
sends a QoS
profile to the AN

UE ———————— AN ———————— UPF ———— DN

The UE performs QoS
control on an uplink
data packet according
to the QoS rule

22

The AN establishes a DRB
of an air interface based on
the QoS profile, and stores a
binding relationship between
a QoS flow and the DRB

Perform QoS control and
QoS verification based on the
QoS control information sent
by the SMF network element

FIG. 2

FIG. 3

UE-DS-TT arrival time ◄─────────────► PDB

| | DS-TT | ← | UE | ← | gNB | ← | UPF | NW-TT | ← |

Buffer
forwarding

(a)

| PCF |

| SMF | ── | TSN AF |

TSCAI burst
arrival time

Downlink burst
arrival time

| DS-TT | ── | UE | ── | NG-RAN | | UPF | NW-TT |

(b)

FIG. 4

FIG. 5

| AF | NEF | TSCTSF | PCF |
|----|-----|--------|-----|

(1) The AF network element may send a request to the TSCTSF network element via the NEF network element, including a QoS parameter

(2) If the request of the AF network element includes a requested 5G system delay, the TSCTSF network element needs to determine a requested PDB in consideration of UE-DS-TT residence time

(3) When the PCF network element obtains service information from the AF network element, the PCF network element may export a QoS parameter in a PCC rule based on the service information and the individual QoS parameter that is received from the TSCTSF network element

FIG. 6

71: The AF sends a payload
interval and padding
information to the PCF

72: The PCF sends a PCC rule
(padding information) to the SMF

73: The SMF
network element
generates a QoS
flow according to
the PCC rule

| | SMF | | | PCF | | | AF |

74: Send processing
information (padding
information)
corresponding to the
QoS flow to the UE

74: Detection rule
(PDR) or QoS
enforcement rule (QER)
(padding information)

| External node | | UE | | RAN | | UPF | | External node |

| DMAC | SMAC | Data type | Valid payload |

| Preamble | SFD | DMAC | SMAC | Data type | Valid payload | Padding | FCS |

| Preamble | SFD | DMAC | SMAC | Data type | Valid payload | Padding | FCS |

FIG. 7

FIG. 8

FIG. 8 (continued)

N31

N12

AUSF

N13

V-PCF

UDM

H-NSSF

V-NSSF

N15

N22

N8

N24

N10

AMF — N11 — V-SMF — N16 — H-SMF — N7 — H-PCF — N5 — AF

N1    N2

N4

N4

UE — (R)AN — N3 — UPF — N9 → UPF — N6 → Data network

VPLMN        HPLMN

(f)

FIG. 8 (continued)

A network device receives a first QoS parameter — 901

The network device sends a second QoS parameter, where the second QoS parameter is determined based on the first QoS parameter and compressed-data information, and the compressed-data information indicates a proportion of compressed data or a proportion of non-compressed data in a transmitted unit data amount — 902

FIG. 9

| PCF | TSCTSF | AF/NEF |

101: Send a request, where the request includes a first QoS parameter and compressed-data information

102: Determine a second QoS parameter based on the first QoS parameter and the compressed-data information

103: Send the second QoS parameter

104: Generate a proper QoS parameter based on the second QoS parameter

105: Send a third QoS parameter recommended by the PCF network element

106: Generate a fourth QoS parameter based on the third QoS parameter and the compressed-data information

107: Send the fourth QoS parameter

FIG. 10

| SMF | PCF | AF/NEF/ TSCTSF |
|---|---|---|

111: Send a request, where the request includes a first QoS parameter and compressed-data information

112: Determine a second QoS parameter based on the first QoS parameter and the compressed-data information

113: Send the second QoS parameter

114: Perform QoS control

115: Send a fifth QoS parameter recommended by the PCF network element

116: Generate a sixth QoS parameter based on the fifth QoS parameter and the compressed-data information

117: Send the sixth QoS parameter

FIG. 11

UPF

SMF

PCF

121: Set a compressed-data
information change trigger

122: Set an N4 rule based on
the compressed-data
information change trigger

123: Send the N4 rule

124: Obtain compressed-data
information through calculation
according to the N4 rule

125: Report the compressed-
data information

126: Determine a second QoS parameter
based on the compressed-data information
and a first QoS parameter that is received
from an AF network element

127: Send the second QoS
parameter

FIG. 12

130

Network device

Receiving unit — 1301

Determining unit — 1302

Sending unit — 1303

FIG. 13

140

Processor

Memory

Transceiver

FIG. 14

## INTERNATIONAL SEARCH REPORT

| International application No. |
| --- |
| **PCT/CN2024/092937** |

| A. | CLASSIFICATION OF SUBJECT MATTER |
| --- | --- |

H04W 28/24(2009.01)i

According to International Patent Classification (IPC) or to both national classification and IPC

| B. | FIELDS SEARCHED |
| --- | --- |

Minimum documentation searched (classification system followed by classification symbols)

IPC:H04W28/-

Documentation searched other than minimum documentation to the extent that such documents are included in the fields searched

Electronic data base consulted during the international search (name of data base and, where practicable, search terms used)

CNABS: CNTXT; ENTXTC; CJFD; CNKI: 时间敏感, 时延敏感, 延时敏感, 延迟敏感, TSC, TSCTSF, 策略控制, PCF, 应用功能, AF, 服务质量, QoS, 压缩; VEN; ENTXT; USTXT; EPTXT; WOTXT; 3GPP; 百度学术, BAIDU SCHOLAR; IEEE: TSC, time sensitive, TSCTSF, PCF, AF, QoS, quality of service, compress

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 116170820 A (DATANG MOBILE COMMUNICATIONS EQUIPMENT CO., LTD.) 26 May 2023 (2023-05-26)<br>description, paragraphs 90, 195-225, and 253-263 | 1-28 |
| A | CN 111770531 A (HUAWEI TECHNOLOGIES CO., LTD.) 13 October 2020 (2020-10-13)<br>entire document | 1-28 |
| A | US 2019124181 A1 (COMCAST CABLE COMMUNICATIONS, L.L.C.) 25 April 2019 (2019-04-25)<br>entire document | 1-28 |
| A | US 2023019215 A1 (TELEFONAKTIEBOLAGET LM ERICSSON (PUBL)) 19 January 2023 (2023-01-19)<br>entire document | 1-28 |
| A | HUAWEI et al. "Support of BAT offset and adjusted periodicity"<br>*3GPP TSG-CT WG3 Meeting #127, C3-231485*, 22 April 2023 (2023-04-22),<br>entire document | 1-28 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 June 2024** | **17 June 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/092937** |

**C.   DOCUMENTS CONSIDERED TO BE RELEVANT**

| Category* | Citation of document, with indication, where appropriate, of the relevant passages | Relevant to claim No. |
| --- | --- | --- |
| A | NOKIA et al. "The correction on BAT window and BAT adaptation capability and the support of provisioning Periodicity Set" *3GPP TSG-CT3 Meeting #128, C3-232061*, 25 May 2023 (2023-05-25),     entire document | 1-28 |

Form PCT/ISA/210 (second sheet) (July 2022)

**INTERNATIONAL SEARCH REPORT**
Information on patent family members

International application No.

**PCT/CN2024/092937**

| Patent document cited in search report | | | Publication date (day/month/year) | Patent family member(s) | | | Publication date (day/month/year) |
|---|---|---|---|---|---|---|---|
| CN | 116170820 | A | 26 May 2023 | WO | 2023093416 | A1 | 01 June 2023 |
| CN | 111770531 | A | 13 October 2020 | WO | 2020200066 | A1 | 08 October 2020 |
| | | | | EP | 3923625 | A1 | 15 December 2021 |
| | | | | US | 2022014475 | A1 | 13 January 2022 |
| | | | | CN | 111770531 | B | 29 March 2022 |
| | | | | EP | 3923625 | A4 | 13 April 2022 |
| | | | | CN | 114698022 | A | 01 July 2022 |
| | | | | US | 11811670 | B2 | 07 November 2023 |
| US | 2019124181 | A1 | 25 April 2019 | EP | 4024826 | A1 | 06 July 2022 |
| | | | | US | 2019124572 | A1 | 25 April 2019 |
| | | | | US | 10855814 | B2 | 01 December 2020 |
| | | | | US | 2021084121 | A1 | 18 March 2021 |
| | | | | US | 11582330 | B2 | 14 February 2023 |
| | | | | US | 2024146827 | A1 | 02 May 2024 |
| | | | | US | 10812629 | B2 | 20 October 2020 |
| | | | | EP | 3474625 | A1 | 24 April 2019 |
| | | | | EP | 3474625 | B1 | 21 September 2022 |
| | | | | CA | 3021658 | A1 | 20 April 2019 |
| | | | | US | 2023224380 | A1 | 13 July 2023 |
| | | | | US | 11849009 | B2 | 19 December 2023 |
| | | | | US | 2020412842 | A1 | 31 December 2020 |
| US | 2023019215 | A1 | 19 January 2023 | WO | 2021140464 | A1 | 15 July 2021 |
| | | | | EP | 4088434 | A1 | 16 November 2022 |

Form PCT/ISA/210 (patent family annex) (July 2022)

**REFERENCES CITED IN THE DESCRIPTION**

**Patent documents cited in the description**

- CN 202310791347